(19) Europäisches Patentamt
European Patent Office
Office européen des brevets

(11) **EP 4 489 956 B1**

(12) **EUROPÄISCHE PATENTSCHRIFT**

(45) Veröffentlichungstag und Bekanntmachung des Hinweises auf die Patenterteilung:
**22.10.2025   Patentblatt 2025/43**

(21) Anmeldenummer: **23707108.9**

(22) Anmeldetag: **01.03.2023**

(51) Internationale Patentklassifikation (IPC):
*B29C 48/52* (2019.01)     *B29C 48/25* (2019.01)
*B29C 48/57* (2019.01)     *B29C 48/40* (2019.01)
*B29C 48/505* (2019.01)    *B29B 7/48* (2006.01)
*B29C 48/655* (2019.01)

(52) Gemeinsame Patentklassifikation (CPC):
**B29C 48/52; B29B 7/48; B29C 48/2517; B29C 48/507; B29C 48/655**

(86) Internationale Anmeldenummer:
**PCT/EP2023/055123**

(87) Internationale Veröffentlichungsnummer:
**WO 2023/169894 (14.09.2023 Gazette 2023/37)**

(54) **SCHNECKENELEMENTE MIT VERBESSERTER MISCHWIRKUNG UND DRUCKAUFBAU**

SCREW ELEMENTS WITH IMPROVED MIXING EFFECT AND PRESSURE BUILDUP

ÉLÉMENTS HÉLICOÏDAUX À EFFET DE MÉLANGE ET À ÉLÉVATION DE PRESSION AMÉLIORÉS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **11.03.2022   EP 22161631**

(43) Veröffentlichungstag der Anmeldung:
**15.01.2025   Patentblatt 2025/03**

(73) Patentinhaber: **Covestro Deutschland AG**
**51373 Leverkusen (DE)**

(72) Erfinder:
• **KOENIG, Thomas**
**51375 Leverkusen (DE)**
• **BIERDEL, Michael**
**51373 Leverkusen (DE)**
• **LIESENFELDER, Ulrich**
**51469 Bergisch Gladbach (DE)**

(74) Vertreter: **Levpat**
**c/o Covestro AG**
**Gebäude K12**
**51365 Leverkusen (DE)**

(56) Entgegenhaltungen:
**EP-A1- 3 281 767      WO-A1-2017/084646**
**WO-A1-2021/065192**

**EP 4 489 956 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Paar viergängiger Schneckenelemente für eine mehrwellige Schneckenmaschine mit gleichsinnig und gleichschnell drehenden Schneckenwellen. Dabei reinigen sich die beiden Schneckenelemente des erfindungsgemäßen Paares Schneckenelemente, die unmittelbar benachbart auf zwei unmittelbar benachbarten Schneckenwellen gegenüberliegen, gegenseitig praktisch ab. Die Erfindung betrifft auch die Verwendung des erfindungsgemäßen Paares Schneckenelemente in einer mehrwelligen Schneckenmaschine sowie eine mehrwellige Schneckenmaschine, die mit einem erfindungsgemäßen Paar Schneckenelemente ausgerüstet ist, sowie ein Verfahren zur Extrusion plastischer oder viskoelastischer Massen unter Verwendung des erfindungsgemäßen Paares Schneckenelemente.

Im Sinne der vorliegenden Erfindung wird unter einer mehrwelligen Schneckenmaschine eine Schneckenmaschine mit mehr als einer Schneckenwelle verstanden, beispielsweise eine Schneckenmaschine mit zwei, drei oder vier Schneckenwellen oder auch Extruder mit acht bis sechzehn, insbesondere zwölf, ringförmig angeordneten Schneckenwellen. Bei mehr als zwei Schneckenwellen können die Drehachsen der Schneckenwellen nebeneinander oder beispielsweise auch - wie bei einem sogenannten Ringextruder - ringförmig zueinander angeordnet sein. Bei Mehrwellenextrudern sind die Drehachsen der Schneckenwellen in aller Regel parallel zueinander angeordnet. Diese parallele Anordnung der Drehachsen ist auch erfindungsgemäß bevorzugt. Die erfindungsgemäßen Schneckenelemente sind bevorzugt in einer Anzahl, die der Anzahl der Schneckenwellen des jeweiligen Extruders entspricht, auf den Schneckenwellen gegenüberliegend angeordnet. Eine solche Schneckenmaschine mit mehr als einer Schneckenwelle wird nachfolgend auch mehrwellige Schneckenmaschine, Mehrwellenschneckenmaschine oder Mehrwellenextruder genannt. Eine zweiwellige Schneckenmaschine wird nachfolgend auch Doppelschneckenextruder genannt. Im Sinne der vorliegenden Erfindung wird der Begriff "Schneckenmaschine" gleichbedeutend mit dem Begriff "Extruder" gebraucht.

Moderne Extruder verfügen über ein Baukastensystem, bei dem zur Bildung einer Schneckenwelle verschiedene Schneckenelemente auf einer Kernwelle aufgezogen werden können; eine solche Schneckenwelle ist also segmentiert. Hiermit kann der Fachmann den Extruder an die jeweilige Verfahrensaufgabe anpassen. Eine Schneckenwelle kann aber auch aus einem Stück angefertigt sein, also nur ein Schneckenelement aufweisen, das sich im Wesentlichen über die gesamte Länge der Schneckenwelle erstreckt oder nur teilweise segmentiert sein. Die vorliegende Erfindung betrifft sowohl Schneckenelemente, die auf eine Kernwelle aufgezogen werden können, als auch auf die oben beschriebenen aus nur einem Stück gefertigten Schneckenwellen.

Gleichsinnig drehende zweiwellige Schneckenmaschinen, deren Schneckenwellen sich gegenseitig exakt abreinigen, sind bereits seit langem bekannt, z.B. aus der DE 862 668 C. In der Polymerherstellung und -verarbeitung haben Schneckenmaschinen mit Schneckenwellen, deren Schneckenelemente auf dem Prinzip exakt abreinigender Schneckenquerschnittsprofile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung von paarweise einander exakt abreinigenden Schneckenelementen in Mehrwellenschneckenmaschinen unterbunden wird. Regeln zur Erzeugung von Schneckenquerschnittsprofilen für einander exakt abreinigende Schneckenelemente sind beispielsweise in [1] ([1] = Klemens Kohlgrüber: "Der gleichläufige Doppelschneckenextruder", 2. Auflage, Hanser Verlag München 2016, Seiten 107 bis 120) dargestellt. Hier wird auch beschrieben, dass bei einander exakt abreinigenden Schneckenelementen ein vorgegebenes Schneckenquerschnittsprofil auf der ersten Welle eines Doppelschneckenextruders das Schneckenquerschnittsprofil auf der zweiten Welle des Doppelschneckenextruders bestimmt ([1], Seite 108). Unter einem Schneckenquerschnittsprofil, im Rahmen dieser Erfindung kurz auch Schneckenprofil genannt, wird dabei die äußere Kontur eines Schneckenelements in einem ebenen Schnitt rechtwinklig zur Drehachse des Schneckenelements, entsprechend der Drehachse der zugehörigen Schneckenwelle, verstanden. Das Schneckenprofil für das Schneckenelement auf der ersten Welle wird als das erzeugende Schneckenprofil bezeichnet. Das Schneckenprofil für das Schneckenelement auf der zweiten Welle folgt aus dem Schneckenprofil der ersten Welle des Doppelschneckenextruders und wird daher als das erzeugte Schneckenprofil bezeichnet. Bei einem Mehrwellenextruder werden das Schneckenelement mit dem erzeugenden Schneckenprofil und das das Schneckenelement mit dem erzeugten Schneckenprofil auf benachbarten Wellen immer abwechselnd eingesetzt.

Hierbei sind zwei Dinge zu unterscheiden: Das exakt abreinigende Schneckenprofil, ein mathematisches Konstrukt, bei dem sich zwei Schneckenelemente, die auf zwei unmittelbar benachbarten Schneckenwellen gegenüberliegen, ohne Spalt einander abreinigen, und Schneckenprofile für in materieller Wirklichkeit zur bestimmungsgemäßen Nutzung, also technisch ausgeführte Schneckenelemente. Wird im Rahmen der vorliegenden Erfindung der Begriff "exakt abreinigend" gebraucht, so ist - soweit nichts anderes dazu erklärt wird - das mathematische Konstrukt eines exakt abreinigenden Schneckenprofils bzw. des entsprechenden, dieses Schneckenprofil aufweisenden, Schneckenelements gemeint. Wird im Rahmen der vorliegenden Erfindung der Begriff "praktisch abreinigend" gebraucht, so ist - soweit nichts anderes dazu erklärt wird - das technische ausgeführte Schneckenelement bzw. dessen Schneckenprofil, wobei dieses praktisch abreinigende Schneckenprofil von einem exakt abreinigenden Schneckenprofil abgeleitet wurde, bevorzugt durch Anwendung einer der Spielstrategien Achsabstandsvergrößerung, Längsschnittäquidistante, Kreisäquidistante oder Raumäquidistante, besonders bevorzugt durch Anwendung einer der Spielstrategien Längsschnittäquidistante, Kreisäquidistante oder Raumäquidistante, wie weiter unten näher erklärt.

Die Spielstrategien Längsschnittäquidistante, Kreisäquidistante und Raumäquidistante werden nachfolgend auch als Längsschnittäquidistantenrechenvorschrift, Kreisäquidistantenrechenvorschrift und Raumäquidistantenrechenvorschrift bezeichnet.

Ein Fachmann auf dem Gebiet der Schneckenelemente versteht natürlich dabei, dass ein einzelnes Schneckenelement oder Schneckenprofil für sich alleine nicht exakt abschabend oder praktisch abschabend sein kann, sondern dass es dafür immer eines Paares solcher Elemente bedarf.

Dem Fachmann ist aus den Druckschriften WO 2017/084646 A1, EP 3 281 767 A1 und WO 2021/065192 A1 nämlich bekannt, dass es bei technisch ausgeführten Maschinen erforderlich ist, von der exakt abreinigenden Geometrie insofern abzuweichen, als konstante Spiele bei der gegenseitigen Abreinigung der Schneckenelemente eingehalten werden. Dies ist notwendig, um adhäsiven und damit vorzeiten Verschleiß, zu verhindern, um Fertigungstoleranzen auszugleichen oder um übermäßige Energiedissipation in den Spielen zu vermeiden.

So sind in [1], Seiten 40 und 41 sowie 117 bis 121, Methoden zur Konstruktion von Schneckenelementen, die bei der gegenseitigen Abreinigung ein konstantes Spiel einhalten, offenbart. Dort wird beispielsweise eine Rechenvorschrift angegeben, wie man aus einem exakt abreinigenden Schneckenprofil ein Schneckenprofil konstruiert, bei dem im Längsschnitt der Schneckenmaschine ein konstantes Spiel zwischen den sich abreinigenden Paaren von Schneckenelementen besteht, also eine Längsschnittäquidistantenrechenvorschrift. Im Weiteren werden exakt abreinigende Schneckenprofile beschrieben, aus denen der Fachmann anhand der bekannten Rechenvorschriften das Schneckenprofil der zu fertigenden Schneckenelemente ableiten kann.

Im Sinne der vorliegenden Erfindung wird unter einem Spiel der Abstand zwischen den sich am nächsten liegenden Punkten der Schneckenprofile zweier sich gegenseitig praktisch abreinigender Schneckenelemente verstanden.

Zur Erzeugung konstanter Spiele sind verschiedene Strategien möglich. Am weitesten verbreitet ist die Erzeugung von Spielen, die in einem Längsschnitt durch die Maschine äquidistant sind. Die Vorgehensweise zur Erzeugung der entsprechenden Schneckenprofile wurde wie bereits erwähnt in [1] auf den Seiten 40 und 41 sowie 117 bis 121 dargestellt.

Die Regeln zur Erzeugung von Schneckenprofilen mit konstanten Spielen sind auf die erfindungsgemäßen Schneckenelemente anwendbar.

So sind auch Schneckenelemente, die eine verbesserte Mischwirkung zum Ziel haben, seit langem Gegenstand der technischen Entwicklung. Zahlreiche bekannte Geometrien vernachlässigen dabei, dass sich vorteilhafterweise Schneckenelemente gegenseitig exakt abreinigen sollten, wie zum Beispiel alle Varianten von Zahnmischelementen, beispielsweise DE 4 134 026 A1, DE 19 706 134 A1 oder WO 2004 009 326 A1. Diese Klasse von Mischelementen ist im Wesentlichen dadurch charakterisiert, dass ein Schneckengewinde mit Durchbrüchen bzw. Nuten ausgestattet wird, die den Materialtransport unterbrechen und für eine verbesserte Durchmischung sorgen. Die Oberflächen in den Durchbrüchen bzw. Nuten werden jedoch nicht kinematisch gereinigt, so dass an diesen Stellen Material anhaften, degradieren und zu einer Quelle der Kontamination für das Extrudat - also hier die zu extrudierende plastische oder viskoelastische Masse - werden kann.

Es sind jedoch auch Mischelemente mit vollständiger Selbstreinigung seit langem bekannt. So wurden bereits in der DE 940 109 C dreigängige Knetscheiben offenbart, die eine verbesserte Mischwirkung gegenüber kontinuierlich fortlaufenden Schneckengängen lieferten.

In der DE 3 412 258 A1 wird gelehrt, wie Spalte zwischen den Schneckenkämmen und der Gehäuseinnenwand für drei- und viergängige Schneckenelemente für Doppelschneckenextruder gestaltet werden können. Durch einen unterschiedlichen Spalt an den Schneckenkämmen wird das Extrudat gezielt geschert. Dazu wird eine symmetrische Anordnung von drei- oder viergängigen Schneckenprofilen einer Doppelschnecke, die a priori an allen Schneckenkämmen denselben Spalt S (dort δ (gesprochen "Delta") genannt) zum Gehäuse aufweisen, mit einer Exzentrizität e, die kleiner ist als der Spalt S, aus den Drehzentren parallel verschoben.

EP 2 131 A1 offenbart eine Methode, um paarweise selbstreinigende Schneckenelemente herzustellen, wobei die einzelnen Schneckenkämme dieser Schneckenelemente einen unterschiedlichen Spalt zum Gehäuse aufweisen. Die Spaltweite eines einzelnen Schneckenkamms kann dabei bis zur halben Gangtiefe h vergrößert werden. Ziel ist auch hier, einen Materialaustausch zwischen den einzelnen Schneckengängen herzustellen und das Material bei der Passage über den Schneckenkamm gezielt zu scheren. Die erhaltenen zweigängigen Schneckenelemente weisen keine Symmetrieachsen auf und unterschiedliche Kammwinkel an den beiden Schneckenkämmen. Beansprucht werden auch drei- und viergängige Schneckenelemente. Bei den dreigängigen Schneckenelementen wird entweder an einem oder an zwei der drei Schneckenkämme der Spalt vergrößert. Unter der Gangtiefe h wird dabei die Hälfte der Strecke, die die Differenz zwischen dem Außendurchmesser da des Schneckenelements und dem Kerndurchmesser di des Schneckenelements ist, verstanden, also h = (da - di) / 2.

DE 42 39 220 A1 beschreibt dreigängige Schneckenelemente, die an den drei Kämmen unterschiedliche Spalte und unterschiedliche Kammwinkel aufweisen, wobei der Schneckenkamm mit dem geringsten Spalt zum Gehäuse den größten Kammwinkel aufweist. Dies erlaubt die Konstruktion von dreigängigen Schneckenprofilen mit einem Verhältnis von Außendurchmesser da zu Kerndurchmesser di von größer als 1,366. Die nach diesem Konstruktionsprinzip ausgeführten Schneckenelemente sind jedoch nachteilig, weil an dem Schneckenkamm mit dem engsten Spalt und gleichzeitig dem größten Kammwinkel eine Zone hoher Scherbelastung für das zu verarbeitende Polymer vorliegt, in der es durch die hohe Scher- und Temperaturbelastung leicht zu einer Schädigung kommen kann.

WO 02 09 919 A2 beschreibt unter anderem dreigängige und viergängige Schneckenelemente, wobei die Kammwinkel an jedem Schneckenkamm eines drei- oder viergängigen Schneckenelementes unterschiedlich ausgeführt werden können. WO 02 09 919 A2 lehrt jedoch nicht, welche Ausführungsformen hinsichtlich ihrer Misch- und Dispergierwirkung oder ihres Verhaltens beim Druckaufbau günstig sind.

EP 1 093 905 A2 beschreibt Schneckenprofile für dreigängige, paarweise selbstreinigende Schneckenelemente für Doppelschneckenextruder mit hoher distributiver und dispersiver Mischwirkung. Die dort beschriebenen Schneckenelemente haben jedoch den Nachteil, dass sie an der Stelle mit dem engsten Spalt zur Gehäusewand einen breiten Kammwinkel aufweisen, was dazu führt, dass eine Zone mit hoher Energiedissipation und einer hohen lokalen Temperaturspitze entsteht, was bei empfindlichen Polymeren zu einer Schädigung führen kann.

Herkömmliche, also zweifach achsensymmetrische viergängige Schneckenprofile können bis zu einem minimalen Verhältnis von Achsabstand a zu Gehäuseinnendurchmesser dg von 0,924 konstruiert werden ([1], Seite 116, Tabelle 2.2 und Bild 2.10), um sich gegenseitig exakt abreinigende Schneckenelemente zu erhalten, die in einer mehrwelligen Schneckenmaschine mit gleichsinnig und gleichschnell drehenden Schneckenwellen mit einem solchen Verhältnis von Achsabstand a zu Gehäuseinnendurchmesser dg eingesetzt werden können. Maschinen mit einem Verhältnis von Achsabstand a zu Gehäuseinnendurchmesser dg von größer 0,924 sind jedoch nicht gebräuchlich, weswegen viergängige Schneckenelemente in selbstreinigenden Mehrwellenextrudern keine Verwendung finden.

Zwei viergängige Schneckenelemente, die sich unmittelbar benachbart auf zwei der gleichsinnig und gleichschnell drehenden Schneckenwellen der mehrwelligen Schneckenmaschine paarweise gegenüberliegen und sich paarweise exakt oder zumindest praktisch abreinigen, weisen flachere Schneckengänge auf als entsprechende Schneckenelemente mit weniger als vier Schneckengängen. Diese flacheren Schneckengänge wiederum bewirken eine gleichmäßigere Scherung, was sich vorteilhaft auf die Qualität von zu extrudierenden plastischen oder viskoelastischen Massen auswirkt. Allerdings stellen herkömmliche viergängige Schneckenelemente dem Extrudat in der Gehäusebohrung nur wenig Volumen zur Verfügung, da herkömmliche viergängige Schneckenelemente die Gehäusebohrungen stärker ausfüllen als beispielsweise zweigängige oder auch dreigängige Schneckenelemente mit demselben Außenradius ra.

US 6 783 270 B1 beschreibt die exzentrische Anordnung von selbstreinigenden Schneckenprofilen in einem vergrößerten Gehäuse. Nach diesem Prinzip können auch viergängige Schneckenprofile in einem solchen Gehäuse verwendet werden. Jedoch offenbart auch US 6 783 270 B1 kein Schneckenprofil eines viergängigen Schneckenelements, das für ein Gehäuse mit einem Verhältnis von Achsabstand a zu Gehäuseinnendurchmesser dg von kleiner 0,924 konstruiert worden ist. Des Weiteren werden gemäß US 6 783 270 B1 Schneckenprofile mit unterschiedlichen Kammwinkeln offenbart, jedoch nicht die genauen Verhältnisse der unterschiedlichen Kammwinkel zueinander offenbart.

Mehrwellenextruder mit gleichsinnig und gleichschnell drehenden Schneckenwellen setzen beim Druckaufbau einen großen Teil der Antriebsleistung in Wärme um (Dissipation), während nur ein kleinerer Teil tatsächlich in Druckenergie umgewandelt wird. Der Anteil der aufgewendeten Energie, der in Druckenergie umgewandelt wird, wird auch als Wirkungsgrad bezeichnet.

Der Erfindung lag die Aufgabe zugrunde, ein Schneckenelement zur Verfügung zu stellen, mit dem eine gegenüber dem Stand der Technik verbesserte Misch- und Dispergierwirkung bei gleichzeitig guter Scherung und gutem Wirkungsgrad beim Druckaufbau erreicht werden kann.

Auch lag der vorliegenden Erfindung die Aufgabe zugrunde, ein Paar viergängiger Schneckenelemente zur Verfügung zu stellen,

das in einer mehrwelligen Schneckenmaschine

mit m gleichsinnig und gleichschnell drehenden Schneckenwellen SW1 bis SWm, deren jeweils benachbarte Drehachsen D1 bis Dm in einem Querschnitt rechtwinklig zu den Drehachsen einen Achsabstand a besitzen, und

mit m einander durchdringenden, kreisförmigen Gehäusebohrungen, die im Querschnitt senkrecht zu den Drehachsen jeweils einen identischen Gehäuseinnenradius rg aufweisen und deren Bohrungsmittelpunkte M1 bis Mm einen Abstand besitzen, der für jeweils unmittelbar benachbarte Bohrungen gleich dem Achsabstand a ist, und deren Bohrungsmittelpunkte M1 bis Mm mit den Mittelpunkten der Querschnitte der jeweiligen Drehachsen D1 bis Dm der Schneckenwellen SW1 bis SWm zusammenfallen,

wobei die Gehäusebohrungen ein Verhältnis von Achsabstand a zu Gehäuseinnendurchmesser dg von kleiner 0,924 aufweisen,

bestimmungsgemäß nutzbar ist.

Auch soll das erfindungsgemäße Paar viergängiger Schneckenelemente dem Extrudat in der Gehäusebohrung mehr Volumen als herkömmliche viergängige Schneckenelemente zur Verfügung stellen.

Darüber hinaus sollen sich die beiden Schneckenelemente des erfindungsgemäßen Paares viergängiger Schneckenelemente bei bestimmungsgemäßer Nutzung gegenseitig praktisch abschaben.

Überraschend wurde nun gefunden, dass die Aufgabe gelöst wird durch ein Paar viergängiger Schneckenelemente mit den Merkmalen des Hauptanspruchs.

Im Rahmen der vorliegenden Erfindung gilt für die nachfolgend genannten Begriffe:

Ein **Schneckenprofil** ist eine geschlossene konvexe Kurve. Dabei setzt sich ein Schneckenprofil aus mehreren voneinander verschiedenen Kurvenzügen zusammen, die - je nach ihren geometrischen Eigenschaften - als "Kamm", als "Flanke" oder als "Nut" bezeichnet werden. Ein Kamm grenzt immer zu beiden Seiten an eine Flanke an. Eine Nut grenzt immer zu beiden Seiten an eine Flanke an. Dabei treten Kämme und Nuten jeweils durch eine Flanke voneinander getrennt in einem Schneckenprofil in demselben Richtungssinn folgend immer abwechselnd auf. Dadurch entsteht die Abfolge Kamm - Flanke - Nut - Flanke - Kamm - usw.

Ein **Kurvenzug** ist eine ununterbrochene Linie mit einer Länge, jedoch ohne Breite, wobei ein Kurvenzug einen ersten Endpunkt und einen zweiten Endpunkt aufweist, die nicht ein und derselbe Punkt sind; das heißt, der erste Endpunkt fällt nicht mit dem zweiten Endpunkt zusammen.

Ein Kurvenzug kann aus mehreren Kurventeilstücken zusammengesetzt sein, wobei ein erstes Kurventeilstück einen gemeinsamen Berührpunkt mit einem zweiten Kurventeilstück hat, das dem ersten Kurventeilstück unmittelbar benachbart ist.

Ein Kurvenzug kann aber auch aus genau einem Kurventeilstück bestehen.

Ein **Kurventeilstück** ist ein Teilstück eines Kurvenzugs, wobei das Kurventeilstück einen ersten Endpunkt und einen zweiten Endpunkt aufweist, die nicht ein und derselbe Punkt sind; das heißt, der erste Endpunkt fällt nicht mit dem zweiten Endpunkt zusammen.

Die mathematischen Ausdrücke, die einem Kurventeilstück zu Grunde liegen, sind ausgewählt aus der Gruppe der mathematischen Ausdrücke umfassend die folgenden Mitglieder: Kreisbogen, Ellipsenbogen, Parabelbogen, Längsschnittäquidistantenrechenvorschrift gemäß [1], Seiten 117 bis 121, Kreisäquidistantenrechenvorschrift und Raumäquidistantenrechenvorschrift. Zur Herstellung eines konstanten Spiels bei der gegenseitigen Abreinigung der Schneckenelemente ist die Längsäquidistantenrechenvorschrift oder die Kreisäquidistantenrechenvorschrift bevorzugt.

Die Längsäquidistantenrechenvorschrift ist in [1], Seiten 117 bis 121, offenbart.

Kreisäquidistanten geht von einem exakt abschabenden Schneckenprofil in der x-y - Ebene eines kartesischen Koordinatensystems aus, wobei in jedem Punkt des Schneckenprofils eine Senkrechte in Richtung zum Drehmittelpunkt P gefällt wird. Der Punkt, der um das halbe Spiel entlang dieser Senkrechte zum Drehmittelpunkt hin verschoben ist, gehört dann zum technisch ausgeführten Schneckenprofil. Falls beispielsweise ein Abschnitt eines exakt abschabenden Schneckenprofils ein Kreisbogen mit einem Radius $r_i$ ist, so ergibt sich als zugehöriger Abschnitt des zugehörigen technisch ausgeführten Schneckenprofils ein Kreisbogen mit gleichem Mittelpunkt und dem Radius $r_i - s/2$.

Die Raumäquidistante ist in [1], Seite 41, erwähnt; eine Raumäquidistante ist beispielsweise durch eine Parameterdarstellung erhältlich.

Eine **Kurve** ist eine ununterbrochene Linie mit einer von Null verschiedenen Länge, jedoch ohne Breite.

Eine Kurve kann sowohl einen ersten Endpunkt als auch einen zweiten Endpunkt aufweisen, sie kann aber auch nur einen ersten oder nur einen zweiten Endpunkt aufweisen oder sie kann überhaupt keinen Endpunkt aufweisen. Sofern eine Kurve sowohl einen ersten Endpunkt als auch einen zweiten Endpunkt aufweist, können diese zusammenfallen, sie müssen es aber nicht. Eine Kurve, die sowohl einen ersten Endpunkt als auch einen zweiten Endpunkt aufweist, hat eine endliche Länge. Wenn eine Kurve sowohl einen ersten Endpunkt als auch einen zweiten Endpunkt aufweist und diese Endpunkte zusammenfallen, handelt es sich um eine geschlossene Kurve.

Da sich alle Kurventeilstücke eines Schneckenprofils in einer Ebene befinden, teilt eine geschlossene Kurve, die ein Schneckenprofil ist, die Fläche dieser Ebene in einen Bereich innerhalb der geschlossenen Kurve und in einen Bereich außerhalb der geschlossenen Kurve.

Ein **Kreisbogen** ist ein Kurventeilstück, bei dem alle Punkte des Kreisbogens den gleichen Abstand, genannt Radius, von einem gemeinsamen Mittelpunkt haben. Ein Kreisbogen hat einen Anfangs- und einen Endpunkt, die nicht ein und derselbe Punkt sind.

Ein Kreisbogen wird nur dann und genau dann als ein Kreisbogen angesehen, wenn alle Punkte dieses Kreisbogens den gleichen Mittelpunkt und den gleichen Radius aufweisen und die Punkte dieses Kreisbogens ein ununterbrochenes Kurventeilstück bilden; das heißt, zwei unmittelbar benachbarte Kreisbögen, die einen gemeinsamen Berührpunkt haben, werden nur dann als zwei Kreisbögen angesehen, wenn sie einen unterschiedlichen Mittelpunkt oder einen unterschiedlichen Radius aufweisen.

Der **Drehpunkt** eines **Schneckenprofils** ist der Schnittpunkt der Drehachse eines Schneckenelements mit der Querschnittsebene rechtwinklig zu dieser Drehachse. Der Drehpunkt des Schneckenprofils, nachfolgend kurz auch Drehpunkt genannt, fällt auch mit dem Bohrungsmittelpunkt der Gehäusebohrung, in der sich das jeweilige Schneckenelement befindet oder für die das jeweilige Schneckenelement ausgelegt ist, zusammen.

Bezogen auf ein Schneckenprofil ist ein Drehpunkt der Punkt, um den ein Schneckenprofil als Querschnittsabbildung eines Schneckenelements rotiert.

Ein **Kamm** ist:

(i) entweder genau ein Kreisbogen eines Schneckenprofils, der den Drehpunkt des Schneckenprofils als Mittelpunkt hat, und bei dem alle Punkte dieses Kreisbogens bis auf die jeweils gemeinsamen Berührpunkte mit den beiden dem Kamm unmittelbar benachbarten Kurventeilstücken einen größeren Abstand vom Drehpunkt haben, als die beiden dem Kamm unmittelbar benachbarten Kurventeilstücke;

(ii) oder ein Punkt eines Schneckenprofils, der einen größeren Abstand vom Drehpunkt hat, als die beiden diesem Punkt unmittelbar benachbarten Punkte; der Punkt, der ein Kamm gemäß dieses Falls (ii) ist, ist also ein lokales Maximum des Schneckenprofils hinsichtlich des Abstands zum Drehpunkt. Bevorzugt ist im Fall (ii) ist der Punkt, der ein Kamm ist, ein Punkt eines Kreisbogens, dessen Radius kleiner ist als der Abstand zwischen diesem Punkt und dem Drehpunkt. Dabei kann im Fall (ii) der Punkt, der ein Kamm ist, der mittlere Punkt eines Kreisbogens sein, dessen Radius kleiner ist als der Abstand zwischen diesem Punkt und dem Drehpunkt.

Im Fall (ii) gehen die Kurvenzüge, die dem Kamm unmittelbar benachbarten sind, in dem Punkt, der der Kamm ist, tangential ineinander über.

Der **Kammradius** ist im Fall (i) der Abstand des jeweiligen Kamms, der ein Kreisbogen ist, vom Drehpunkt eines Schneckenprofils und im Fall (ii) der Abstand des Punktes, der ein Kamm ist, vom Konstruktionspunkt des Kreisbogens, dessen mittlerer Punkt der Punkt ist, der ein Kamm ist.

Eine **Nut** ist:

(iii) entweder genau ein Kreisbogen eines Schneckenprofils, der den Drehpunkt des Schneckenprofils als Mittelpunkt hat, und bei dem alle Punkte dieses Kreisbogens bis auf die jeweils gemeinsamen Berührpunkte mit den beiden der Nut unmittelbar benachbarten Kurventeilstücken einen kleineren Abstand vom Drehpunkt haben als die beiden der Nut unmittelbar benachbarten Kurventeilstücke;

(iv) oder ein Punkt eines Schneckenprofils, der einen kleineren Abstand vom Drehpunkt hat, als die beiden diesem Punkt unmittelbar benachbarten Punkte; der Punkt, der ein Kamm gemäß dieses Falls (iv) ist, ist also ein lokales Minimum des Schneckenprofils hinsichtlich des Abstands zum Drehpunkt. Bevorzugt ist im Fall (iv) ist der Punkt, der eine Nut ist, ein Punkt eines Kreisbogens, dessen Radius größer ist als der Abstand zwischen diesem Punkt und dem Drehpunkt. Dabei kann im Fall (ii) ist der Punkt, der eine Nut ist, der mittlere Punkt eines Kreisbogens sein, dessen Radius größer ist als der Abstand zwischen diesem Punkt und dem Drehpunkt.

Im Fall (iv) gehen die Kurvenzüge, die der Nut unmittelbar benachbarten sind, in dem Punkt, der die Nut ist, tangential ineinander über.

Eine **Flanke** ist ein Kurvenzug eines Schneckenprofils, bei dem alle Punkte dieses Kurvenzugs bis auf den gemeinsamen Berührpunkt mit einem ersten der Flanke unmittelbar benachbarten Kurventeilstück einen kleineren Abstand vom Drehpunkt haben als dieses erste der Flanke unmittelbar benachbarte Kurventeilstück und gleichzeitig alle Punkte dieses Kurvenzugs bis auf den gemeinsamen Berührpunkt mit einem zweiten der Flanke unmittelbar benachbarten Kurventeilstück einen größeren Abstand vom Drehpunkt aufweisen als dieses zweite der Flanke unmittelbar benachbarte Kurventeilstück des Schneckenprofils.

Eine Flanke kann aus mehreren Kurventeilstücken zusammengesetzt sein, auf die die vorgenannte Definition zutrifft. Eine Flanke wird dann durch einen konvexen Kurvenzug dargestellt, der sich aus mehreren Kurventeilstücken zusammensetzt, wobei die Krümmungsradien der Kurventeilstücke immer kleiner sind als der Achsabstand a.

Erfindungsgemäß bevorzugt wird eine Flanke aus einem konvexen Kurvenzug gebildet, dessen Kurventeilstücke ausschließlich aus Kreisbögen mit Radius kleiner als oder gleich Achsabstand a gebildet sind und erfindungsgemäß besonders bevorzugt wird eine Flanke durch genau einen Kreisbogen mit Radius kleiner als Achsabstand a gebildet. Erfindungsgemäß insbesondere bevorzugt gilt, dass alle Flanken eines Schneckenquerschnittsprofils jeweils durch genau einen Kreisbogen mit Radius kleiner als Achsabstand a gebildet werden.

Das erfindungsgemäße Schneckenprofil weist genau acht Flanken auf. Erfindungsgemäß bevorzugt gilt dabei: Für jede der acht Flanken gilt unabhängig von jeder der anderen sieben Flanken:

eine Flanke ist aus genau einem einzigen Kreisbogen gebildet, wobei dieser Kreisbogen einen Mittelpunkt besitzt, der nicht der Drehpunkt des Schneckenprofils ist, oder

eine Flanke kann ausschließlich aus mehreren Kreisbögen gebildet sein, wobei für die Mittelpunkte aller dieser Kreisbögen gilt, dass diese Mittelpunkte vom Drehpunkt des Schneckenprofils verschieden sind, oder

eine Flanke kann aus mindestens einem Kreisbogen und mindestens einem Kurventeilstück gebildet sein, das nicht ein Kreisbogen ist, wobei kein Kreisbogen einen Mittelpunkt besitzt, der der Drehpunkt des Schneckenprofils ist, oder

eine Flanke kann aus nur einem einzigen Kurventeilstück gebildet sein, das nicht ein Kreisbogen ist, oder

eine Flanke kann ausschließlich aus mehreren Kurventeilstücken gebildet sein, von denen keines ein Kreisbogen ist.

Alternativ erfindungsgemäß bevorzugt wird eine Flanke aus einem konvexen Kurvenzug gebildet, dessen Kurventeilstücke ausschließlich nach einer Längsschnittäquidistanten-, Kreisäquidistanten- oder Raumäquidistantenrechenvorschrift gebildet sind, und erfindungsgemäß besonders bevorzugt wird eine Flanke durch genau ein ausschließlich nach einer Längsschnittäquidistanten-, Kreisäquidistanten- oder Raumäquidistantenrechenvorschrift gebildetes Kurventeilstück gebildet. Alternativ erfindungsgemäß insbesondere bevorzugt gilt, dass alle Flanken eines Schneckenquerschnittsprofils ausschließlich nach einer Längsschnittäquidistanten-, Kreisäquidistanten- oder Raumäquidistantenrechenvorschrift gebildet werden, und erfindungsgemäß ganz besonders bevorzugt werden alle Flanken eines Schneckenquerschnittsprofils jeweils durch genau ein ausschließlich nach der Längsschnittäquidistanten-, Kreisäquidistanten- oder Raumäquidistantenrechenvorschrift gebildetes Kurventeilstücke gebildet. Alternativ ganz insbesondere bevorzugt sind alle Kurvenzüge eines Schneckenprofils nach derselben Längsschnittäquidistanten-, Kreisäquidistanten- oder Raumäquidistantenrechenvorschrift gebildet.

Im Sinne der vorliegenden Erfindung wird ein Schneckenelement als viergängig bezeichnet, wenn es genau vier Kämme aufweist.

Insbesondere wird die Aufgabe gelöst durch ein Paar viergängige Schneckenelemente, geeignet für eine mehrwellige Schneckenmaschine

mit m gleichsinnig und gleichschnell drehenden Schneckenwellen SW1 bis SWm, deren jeweils benachbarte Drehachsen D1 bis Dm in einem Querschnitt rechtwinklig zu den Drehachsen einen Achsabstand a besitzen und mit m einander durchdringenden, kreisförmigen Gehäusebohrungen, die jeweils einen identischen Gehäuseinnenradius rg aufweisen und deren Bohrungsmittelpunkte M1 bis Mm einen Abstand besitzen, der gleich dem Achsabstand a ist, und deren Bohrungsmittelpunkte M1 bis Mm mit den jeweilig zugehörigen Drehachsen D1 bis Dm der Schneckenwellen SW1 bis SWm zusammenfallen,

wobei jedes der beiden Schneckenelemente des Paares Schneckenelemente ein Schneckenprofil aufweist, für das gilt, dass:

(1) es eine geschlossene konvexe Kurve ist,

wobei diese geschlossene konvexe Kurve nur aus Kurventeilstücken zusammengesetzt ist, deren Krümmungsradien kleiner oder gleich dem Achsabstand a sind,

(2) es sich aus mindestens 16 Kurvenzügen zusammensetzt,

(3) es genau eine oder keine Achsensymmetrie aufweist,

(4) es genau vier Nuten aufweist,

(5) es genau vier Kämme - umlaufend mit K1, K2, K3 und K4 benannt - aufweist,

(6) r(Ki) der Kammradius des Kammes Ki ist, wobei gilt:

r(K1) > r(K2) und r(K1) > r(K3) und r(K1) > r(K4), und

r(K3) > r(K2) und r(K3) > r(K4),

wobei r(K1) der Kammradius des Schneckenkamms K1 ist und r(K2) der Kammradius des Schneckenkamms K2 ist und r(K3) der Kammradius des Schneckenkamms K3 ist, und r(K4) der Kammradius des Schneckenkamms K4 ist,

wobei r(K1) gleich dem Außenradius ra ist,

und m eine ganze Zahl größer 1 ist, bevorzugt von 2 bis 16, besonders bevorzugt, 2, 3, 4, 6, 8, 10, 12 und 16,

und i die Werte 1, 2, 3 oder 4 annehmen kann,

und der Außenradius ra der Radius des Kreises ist, der das gesamte Schneckenprofil einschließt und dessen Mittelpunkt der zu diesem Schneckenprofil zugehörige Drehpunkt ist, wobei der Kamm K1 ein Kreissegment dieses Kreises ist,

(7) sich zwei unmittelbar benachbart auf zwei der gleichsinnig und gleichschnell drehenden Schneckenwellen der mehrwelligen Schneckenmaschine paarweise gegenüberliegende Schneckenelemente des Paares Schneckenelemente paarweise praktisch abreinigen,

(8) eine Nut vom nächstliegenden Punkt eines benachbarten Kamms durch eine Flanke getrennt ist,

(9) es genau acht Kurvenzüge aufweist, die Flanken sind.

Daraus folgt für das erfindungsgemäße Schneckenprofil:
Die genau vier Schneckenkämme K1, K2, K3 und K4 des erfindungsgemäßen Schneckenelements weisen unterschiedliche Spalte S1, S2, S3 und S4 zur Gehäuseinnenwand auf, wobei S1 der Spalt zwischen Schneckenkamm K1 und der Gehäuseinnenwand ist, S2 der Spalt zwischen Schneckenkamm K2 und der Gehäuseinnenwand ist, S3 □der Spalt zwischen Schneckenkamm K3 und der Gehäuseinnenwand ist, und S4 der Spalt zwischen Schneckenkamm K4 und der Gehäuseinnenwand ist, wobei folgende Relationen gelten: S1<S2 und S1<S3 und S1<S4 und S3<S4 und S3<S2.

Im Sinne der vorliegenden Erfindung wird unter einem Spalt S der Abstand zwischen einem Schneckenkamm und der Gehäuseinnenwand bezeichnet, gehorcht also der Gleichung $S_i = r_g - r(K_i)$, also $S1 = r_g - r(K1)$ und $S2 = r_g - r(K2)$ und $S3 = r_g - r(K3)$ und $S4 = r_g - r(K4)$.

Mit dem erfindungsgemäßen Schneckenelement wird eine gegenüber dem Stand der Technik verbesserte Misch- und Dispergierwirkung bei gleichzeitig guter Scherung und gutem Wirkungsgrad beim Druckaufbau erreicht und es ist gewährleistet, dass zwei erfindungsgemäße Schneckenelemente, die unmittelbar benachbart auf zwei unmittelbar benachbarten Schneckenwellen gegenüberliegen, sich gegenseitig praktisch abreinigen.

Die Energieeinleitung ist auf Grund der größeren Spalte der Kämme K2, K3, und K4 im Vergleich zum Spalt des Kamms K1 beim erfindungsgemäßen Schneckenelement im Vergleich zu herkömmlichen, nach dem Stand der Technik bekannten Schneckenelementen reduziert. Überraschend weisen die erfindungsgemäßen viergängigen Schneckenelemente trotzdem eine hervorragende Misch- und Dispergierwirkung auf.

Außerdem sind die erfindungsgemäßen Schneckenelemente in Mehrwellenextrudern mit gleichsinnig und gleichschnell drehenden Schneckenwellen mit einem Verhältnis von Achsabstand a zu Gehäuseinnendurchmesser dg von a/dg kleiner 0,924 einsetzbar und somit relevant für die industrielle Praxis.

In einer erfindungsgemäß bevorzugten Ausführungsform des erfindungsgemäßen viergängigen Schneckenelements gilt außerdem für das Schneckenprofil mit den unter (1) bis (9) dargestellten Merkmalen, dass:
(10) jeder der vier Kämme jeweils aus nur jeweils einem Kurventeilstück gebildet ist, das ein Kreisbogen ist, dessen Mittelpunkt der den Kämmen K 1, K2, K3 und K4 gemeinsame Drehpunkt ist,
und
jede der vier Nuten aus nur jeweils einem Kurventeilstück gebildet ist, das ein Kreisbogen ist, dessen Mittelpunkt der den vier Nuten gemeinsame Drehpunkt ist, und wobei es genau eine Nut gibt, deren Abstand vom Drehpunkt kleiner ist als die Abstände der anderen Nuten vom Drehpunkt.

Für diesen erfindungsgemäß bevorzugten Fall mit dem zusätzlichen Merkmal (10) gilt dabei außerdem, dass der Kernradius ri der Radius der Nut mit dem kleinsten Radius - ausgehend vom Drehpunkt des Schneckenprofils - aller Nuten ist.

Die Kreisbögen, die die genau vier Nuten darstellen, haben in dieser erfindungsgemäß bevorzugten Ausführungsform genauso wie die Kreisbögen, die die genau vier Kämme K1, K2, K3 und K4 darstellen, denselben Mittelpunkt, nämlich den Drehpunkt. Der Drehpunkt ist also der gemeinsame Mittelpunkt aller vier Kämme K1, K2, K3 und K4 als auch aller vier Nuten.

Daraus ergibt sich, dass in dieser erfindungsgemäß bevorzugten Ausführungsform ein Schneckenprofil an allen Übergangen von einem Schneckenkamm zu einer Flanke jeweils einen Knick aufweist. Ein Knick im Schneckenprofil bedeutet, dass im Schneckenelement an der entsprechenden Stelle eine Kante ausgebildet ist. Mathematisch bedeutet ein Knick, dass ein Kurvenzug an der Stelle des Knicks nicht stetig differenzierbar ist.

Besonders bevorzugt in dieser erfindungsgemäß bevorzugten Ausführungsform mit dem zusätzlichen Merkmal (10) weist der Schneckenkamm mit dem größten Kammradius r(Ki), also der Kamm K1, den kleinsten Kammwinkel auf. Auf diese Weise wird der Energieeintrag reduziert und die thermische Belastung des Polymers vermindert. Daraus folgt für die beschriebene mehrwellige Schneckenmaschine, dass der Schneckenkamm mit dem engsten Spalt zum Gehäuse, also der Kamm K1 mit dem Spalt S1, den kleinsten Kammwinkel aufweist.

Außerdem bevorzugt - aber unabhängig davon, ob das zusätzliche Merkmal (10) vorhanden ist oder nicht - weist das erfindungsgemäße viergängige Schneckenelement mindestens einen Schneckenkamm Ki auf, dessen Kammwinkel KWi sich von den Kammwinkeln der anderen Schneckenkämme unterscheidet.

Weiter besonders bevorzugt werden die Kammwinkel so gewählt, dass das Schneckenprofil keine Symmetrieachsen aufweist, d.h. KW2 ≠ KW4 und KW1 ≠ KW3, wobei KW1 der Kammwinkel des Kammes K1 ist, KW2 der Kammwinkel des Kammes K2 ist, KW3 der Kammwinkel des Kammes K3 ist, und KW4 der Kammwinkel des Kammes K4 ist.

Insbesondere bevorzugt unterscheiden sich die Kammwinkel aller Kämme voneinander.

Erfindungsgemäß ist es auch so, dass zwei erfindungsgemäße Schneckenelemente, die unmittelbar benachbart auf zwei Schneckenwellen der beschriebenen mehrwelligen Schneckenmaschine paarweise gegenüberliegen, sich paarweise praktisch abreinigen; solche zwei erfindungsgemäßen Schneckenelemente werden als ein erfindungsgemäßes Paar Schneckenelemente bezeichnet. Dabei können die Schneckenprofile dieser zwei erfindungsgemäßen Schneckenelemente gleich oder unterschiedlich sein.

Erfindungsgemäß bevorzugt ist es so, dass in einem Querschnitt rechtwinklig zu den Schneckenwellen alle Schneckenelemente einander paarweise praktisch abreinigen. Dies gilt natürlich wiederum bis auf die technisch nötigen Spiele. Dabei können die Schneckenprofile dieser erfindungsgemäßen Schneckenelemente gleich oder unterschiedlich sein.

Bevorzugt wird bei einem gegebenen Gehäuseinnenradius rg in Relation zu einem gegebenen Achsabstand a der Abstand r(K1) des Kamms K1 vom Drehpunkt so gewählt, dass für r(K1) der Bereich gilt:

r(K1) ist kleiner oder gleich rg - 0,001 * a und r(K1) ist größer oder gleich rg - 0,015 * a.

Für den Kamm K3 gilt bevorzugt der Bereich:

r(K3) ist kleiner oder gleich r(K1) - 0,0015 * a und r(K3) ist kleiner oder größer r(K1) - 0,03 * a.

Sowohl für den Kamm K2 als auch für den Kamm K4 gelten bevorzugt die Bereiche:

r(K2) ist kleiner oder gleich r(K1) - 0,003 * a und r(K2) ist größer oder gleich r(K1) - 0,08 * a, und

r(K4) ist kleiner oder gleich r(K1) - 0,003 * a und r(K4) ist größer oder gleich r(K1) - 0,08 * a.

Dabei können r(K2) und r(K4) gleich oder unterschiedlich sein, bevorzugt sind (K2) und r(K4) unterschiedlich.

Sowohl für den Kamm K2 als auch für den Kamm K4 gelten besonders bevorzugt die Bereiche:

r(K2) ist kleiner oder gleich r(K1) - 0,005 * a und r(K2) ist größer oder gleich r(K1) - 0,04 * a, und

r(K4) ist kleiner oder gleich r(K1) - 0,005 * a und r(K4) ist größer oder gleich r(K1) - 0,04 * a.

Dabei können r(K2) und r(K4) gleich oder unterschiedlich sein, bevorzugt sind (K2) und r(K4) unterschiedlich.

Daraus folgt erfindungsgemäß

für eine mehrwellige Schneckenmaschine

mit m gleichsinnig und gleichschnell drehenden Schneckenwellen SW1 bis SWm, deren jeweils benachbarte Drehachsen D1 bis Dm in einem Querschnitt rechtwinklig zu den Drehachsen einen jeweils identischen Achsabstand a besitzen und

mit m einander durchdringenden, kreisförmigen Gehäusebohrungen, die jeweils einen identischen Gehäuseinnenradius rg aufweisen und deren Bohrungsmittelpunkte M1 bis Mm einen Abstand besitzen, der gleich dem Achsabstand a ist, und deren Bohrungsmittelpunkte M1 bis Mm mit den jeweiligen Drehachsen D1 bis Dm der Schneckenwellen SW1 bis SWm zusammenfallen,

dass

der Spalt S1 in Relation zum Abstand a der Drehpunkte DP1 und DP2 bevorzugt von S1/a = 0,001 bis S1/a = 0,015 beträgt. Der Spalt S3 beträgt somit in Relation zum Achsabstand a der Drehpunkte DP1 und DP2 in Abhängigkeit von S1 bevorzugt von S3/a = S1/a + 0,0025 bis S3/a = S1/a + 0,045 und besonders bevorzugt von S3/a = S1/a + 0,004 bis S3/a = S1/a + 0,035. Der Drehpunkt DP1 ist dabei der Schnittpunkt der Drehachse D1 mit der Ebene des Schneckenprofils rechtwinklig zu dieser Drehachse D1 und der Drehpunkt DP2 ist dabei der Schnittpunkt der Drehachse D2 mit der Ebene des Schneckenprofils rechtwinklig zu dieser Drehachse D2.

Die Spalte S2 und S4 betragen somit in Relation zum Abstand a der Drehpunkte DP1 und DP2 und in Abhängigkeit von S1 bevorzugt im Bereich S1/a + 0,004 kleiner oder gleich S2/a kleiner oder gleich S1/a + 0,095 und S1/a + 0,004 kleiner oder gleich S4/a kleiner oder gleich S1/a + 0,095, sowie besonders bevorzugt S 1/a+ 0,006 kleiner oder gleich S2/a kleiner oder gleich S1/a + 0,055 und S1/a + 0,006 kleiner oder gleich S4/a <= S1/a + 0,055.

Erfindungsgemäß beträgt der Kammwinkel KW1 bevorzugt 0 Grad < KW1 < 8 Grad und besonders bevorzugt 2 Grad < KW1 < 6 Grad.

Alternativ erfindungsgemäß bevorzugt beträgt der Kammwinkel KW1 0 Grad, wenn das Schneckenprofil am Kamm stetig differenzierbar ist, also das Schneckenprofil am Kamm keinen Knick aufweist.

Gegenstand der vorliegenden Erfindung ist ferner die Verwendung eines Paares der erfindungsgemäßen Schneckenelemente in einer mehrwelligen Schneckenmaschine. Bevorzugt wird das Paar der erfindungsgemäßen Schneckenelemente in einer zweiwelligen Schneckenmaschine eingesetzt, also in einem Doppelschneckenextruder.

Gegenstand der vorliegenden Erfindung ist somit auch eine mit einem Paar der erfindungsgemäßen Schneckenelemente ausgerüstete mehrwellige Schneckenmaschine. Die mehrwellige Schneckenmaschine ist dabei mit bevorzugt mit mindestens so vielen Schneckenelementen ausgerüstet, wie die Schneckenmaschine Wellen aufweist. Die erfindungsgemäßen Schneckenelemente sind dabei so auf den Schneckenwellen angeordnet, dass sich jedes der erfindungsgemäßen Schneckenelemente mit mindestens einem anderen der erfindungsgemäßen Schneckenelemente praktisch abreinigt.

Das erfindungsgemäße Paar Schneckenelemente kann in einer mehrwelligen Schneckenmaschine in Form von Knet-, Förder- oder Mischelementen vorliegen. Es ist möglich, Knet-, Förder-, und Mischelemente in einer Schneckenmaschine miteinander zu kombinieren. Das erfindungsgemäße Paar Schneckenelement kann auch mit anderen Schneckenelementen, die z.B. nach dem Stand der Technik bekannt sind, kombiniert werden.

Ein Förderelement zeichnet sich bekanntlich dadurch aus (siehe zum Beispiel [1], Seiten 136 - 142), dass ein Schneckenprofil in Achsrichtung kontinuierlich schraubenförmig verdreht und fortgesetzt wird. Dabei kann das Förderelement rechts- oder linksgängig sein. Die Steigung eines erfindungsgemäßen Förderelements liegt bevorzugt im Bereich des 0,5-fachen bis 5-fachen des Achsabstands a und die axiale Länge eines erfindungsgemäßen Förderelements liegt bevorzugt im Bereich des 0,25-fachen bis 2-fachen der Steigung. Die Länge des Förderelements ist dabei besonders bevorzugt gleich der Steigung; damit bildet das Förderelement eine vollständige Drehung des Schneckenprofils ab.

Ein Knetelement zeichnet sich bekanntlich dadurch aus (siehe zum Beispiel [1], Seiten 142 - 145), dass ein Schneckenprofil in Achsrichtung absatzweise achsparallel in Form von Knetscheiben fortgeführt wird. Die Anordnung der Knetscheiben kann wahlweise rechts- oder linksgängig erfolgen, wodurch sich wahlweise eine Förderwirkung oder eine Rückförderung ergibt. Bei einem Versatzwinkel von 45° zwischen zwei axial benachbarten Knetscheiben ergibt sich für viergängige Schnecken eine neutrale Anordnung ohne Förderwirkung. Die axiale Länge der Knetscheiben liegt bevorzugt im Bereich des 0,05-fachen bis 0,5-fachen des Achsabstands a. Der axiale Abstand zwischen zwei benachbarten Knetscheiben liegt bevorzugt im Bereich des 0,0005-fachen bis 0,02-fachen des Achsabstands a.

Mischelemente werden bekanntlich unter anderem dadurch gebildet (siehe zum Beispiel [1], Seiten 148 -151), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstands a und die axiale Länge der Elemente liegt bevorzugt im Bereich des 0,5-fachen bis 5-fachen des Achsabstands a. Die Durchbrüche haben bevorzugt die Form von u- oder v-förmigen Nuten, die bevorzugt gegenfördernd oder achsparallel angeordnet sind.

Die Reihenfolge der Schneckenelemente bestehend aus Förderelementen und / oder Knetelementen und / oder Mischelementen auf einer Schneckenwelle wird auch als Schneckenkonfiguration bezeichnet.

Das erfindungsgemäße Schneckenelement kann auch als Übergangselement ausgestaltet sein, das heißt, dass das Schneckenprofil an einer Stelle der axialen Ausdehnung des Schneckenelementes ein anderes ist als an einer anderen Stelle der axialen Ausdehnung des Schneckenelements, wobei sich diese verschiedenen Schneckenprofile nicht durch Drehung ineinander überführen lassen.

Das erfindungsgemäße Schneckenelement eignet sich zur Extrusion plastischer und viskoelastischer Massen, z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Gegenstand der vorliegenden Erfindung ist somit auch eine mit mindestens einem Paar der erfindungsgemäßen Schneckenelemente ausgerüstete mehrwellige Schneckenmaschine.

Gegenstand der vorliegenden Erfindung ist daher auch ein Verfahren zur Extrusion plastischer oder viskoelastischer Massen unter Verwendung eines erfindungsgemäßen Paares Schneckenelemente oder unter Verwendung einer mit einem erfindungsgemäßen Paar Schneckenelemente ausgerüsteten Schneckenmaschine.

Unter einer plastischen Masse wird eine verformbare Masse verstanden. Beispiele für plastische Massen sind Polymerschmelzen, vor allem von Thermoplasten, sowie Elastomere, Mischungen von Polymerschmelzen oder Dispersionen von Polymerschmelzen mit Feststoffen, Flüssigkeiten oder Gasen.

Bevorzugt werden thermoplastische Polymere, auch Thermoplaste genannt, oder Gemische von thermoplastischen Polymeren aus der folgenden Reihe eingesetzt: Polycarbonat, Polyamid, Polyester, insbesondere Polybutylenterephthalat und Polyethylenterephthalat, sowie Polyether, thermoplastisches Polyurethan, Polyacetal, Fluorpolymer, insbesondere Polyvinylidenfluorid, sowie Polyethersulfone, Polyolefin, insbesondere Polyethylen und Polypropylen, sowie Polyimid, Polyacrylat, insbesondere Poly(methyl)methacrylat, sowie Polyphenylenoxid, Polyphenylensulfid, Polyetherketon, Polyaryletherketon, Styrolpolymerisate, insbesondere Polystyrol und Styrolcopolymere, insbesondere Styrolacrylnitrilcopolymer und Acrylnitrilbutadienstyrolblockcopolymere sowie Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht.

Unter viskoelastischen Massen werden solchen Materialien und Mischungen verstanden, die eine zeit-, temperatur- und frequenzabhängige Elastizität aufweisen. Die Viskoelastizität ist durch ein teilweise elastisches, teilweise viskoses Verhalten geprägt. Das Material relaxiert nach Entfernen der externen Kraft nur unvollständig, die verbleibende Energie wird in Form von Fließvorgängen (Retardation) abgebaut.

Beispiele für viskoelastische Materialien sind Styrol-Butadien-Kautschuk, Naturkautschuk, Butatdien-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyethylen-Kautschuk. Eine Kombination von zwei oder mehreren der aufgeführten Kautschuke, oder eine Kombination aus einem oder mehreren Kautschuk mit einem oder mehreren Kunststoffen ist natürlich auch möglich.

Die zu extrudierenden plastischen oder viskoelastischen Massen können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

Additive können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Weichmacher, Farbmittel, Pigmente, Verarbeitungshilfsmittel, Füllstoffe, Antioxidantien, Verstärkungsstoffe, UV-Absorber und Lichtstabilisatoren, Extenderöle, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren sein. Beispielhaft für Füll- und Verstärkungsstoffe sind Ruß, Glasfaser, Ton, Glimmer, Graphitfaser, Titandioxid, Kohlenstofffasern, Kohlenstoffnanoröhrchen, ionische Flüssigkeiten und Naturfasern.

Das erfindungsgemäße Paar Schneckenelemente eignen sich wie oben ausgeführt besonders zur Extrusion viskoelastischer Massen. Die Verfahrensschritte, die mit Hilfe dieses Paares Schneckenelemente durchgeführt werden können, sind beispielsweise das Einmischen oder Dispergieren von Feststoffen oder Flüssigkeiten oder Gasen. Feststoffe können beispielsweise die oben genannten festen Additive sein. Flüssigkeiten können beispielsweise die oben genannten Additive in flüssiger Form sein, aber auch beispielsweise Wasser. Gase können beispielsweise Stickstoff oder Kohlendioxid sein.

Insbesondere auch kann ein erfindungsgemäßes Paar Schneckenelemente oder eine mit mindestens einem erfindungsgemäßen Paar Schneckenelemente ausgerüstete ein- oder mehrwellige Schneckenmaschine vorteilhaft zur Compoundierung von Thermoplasten, insbesondere von Polycarbonaten oder thermoplastischen Polyurethanen, mit Farbmitteln, Pigmenten- oder Zuschlagstoffen eingesetzt werden.

Gegenstand der vorliegenden Erfindung ist somit sowohl ein Verfahren zur Compoundierung von Thermoplasten, insbesondere von Polycarbonaten oder thermoplastischen Polyurethanen, mit Farb- und Zuschlagstoffen unter Verwendung eines erfindungsgemäßen Paares der Schneckenelemente als auch die Verwendung eines erfindungsgemäßen Paares Schneckenelemente zur Compoundierung von Thermoplasten, insbesondere von Polycarbonaten oder thermoplastischen Polyurethanen, mit Farb- und Zuschlagstoffen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

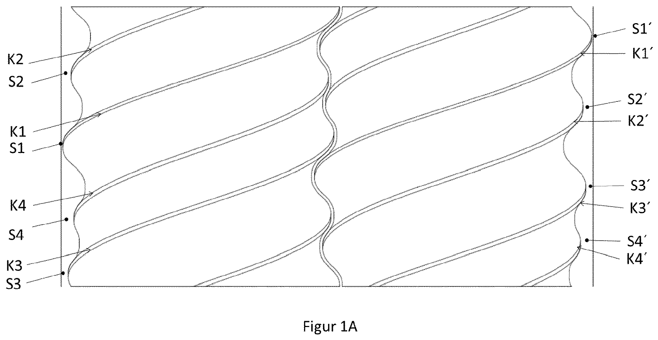

Figur 1A zeigt ein erfindungsgemäßes, einander praktisch abschabendes Paar viergängiger Schneckenelemente für einen gleichsinnig rotierenden Doppelschneckenextruder in der Aufsicht. Die Gehäusewand ist in Figur 1A durch vertikale Linien angedeutet.

Die Schneckenkämme sind mit K1 bis K4 beim linken Schneckenelement und mit K1' bis K4' beim rechten Schneckenelement bezeichnet. Der Schneckenkamm K1 reinigt das Gehäuse mit dem Spalt S1, K2 mit dem Spalt S2, usw. Das Verhältnis a/dg von Achsabstand a zu Gehäuseinnendurchmesser dg beträgt 0,899 und ist somit kleiner als 0,924.

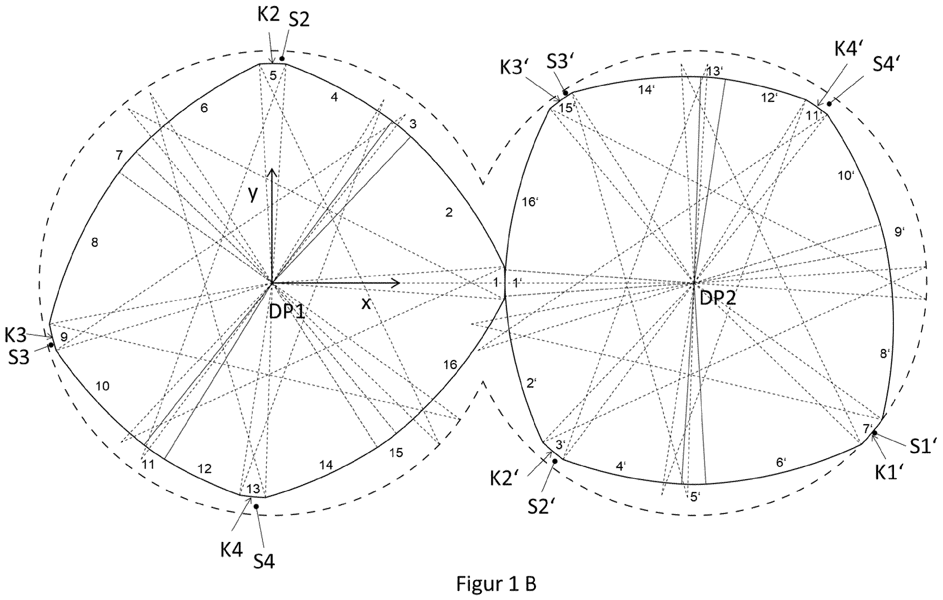

Figur 1B zeigt das Paar viergängiger Schneckenelemente aus Figur 1A im Querschnitt, zeigt also die Schneckenquerschnittsprofile dieser Schneckenelemente. Die Drehpunkte der Doppelschnecke sind wiederum mit DP1 und DP2 bezeichnet. Figur 1B zeigt die Schneckenprofile zweier einander exakt abreinigender Schneckenelemente, d.h. es existiert kein Spiel zwischen den Schneckenelementen bei der gegenseitigen Reinigung der Schneckenelemente. Ebenso ist der Spalt S1 bzw. S1' zwischen dem Schneckenkamm K1 bzw. K1' und dem Gehäuse (hier durch eine gestrichelt dargestellte Linie wiedergegeben) gleich Null. In der Praxis wird man hier einen von Null verschiedenen Spalt S1 bzw. S1' einstellen, ebenso wie man bestrebt ist, zwischen den Schneckenelementen ein Spiel einzustellen. Die Vorgehensweise dazu ist, wie bereits weiter oben erwähnt, beispielsweise in [1] auf den Seiten 40 und 41 sowie 117 bis 121. dargestellt. Die Kreisbögen, aus denen sich die Schneckenprofile zusammensetzen, sind beim linken Schneckenprofil mit den Ziffern 1 bis 16 bezeichnet und beim rechten Schneckenprofil mit den Ziffern 1' bis 16'. Die Spalte zwischen den Schneckenkämmen und der Gehäusewand tragen die Bezeichnungen S1 bis S4 beim linken Schneckenelement und S1' bis S4' beim rechten Schneckenelement. Der Spalt S1 ist in der Darstellung von Figur 1B nicht zu sehen, weil das linke Schneckenelement in der gezeigten Position gerade das benachbarte Schneckenelement reinigt.

Die Schneckenprofile der Schneckenelemente der Figur 1B setzen sich nur aus Kreisbögen zusammen. In der folgenden Tabelle 1B sind für die Schneckenprofile aus der Figur 1B mit den Kreisbögen 1 bis 16 und 1' bis 16' die Radien, die Zentriwinkel, die Koordinaten der Kreismittelpunkte (MP) und die Koordinaten der Startpunkte (SP) der jeweiligen Kreisbögen aufgeführt. Die Nummerierung der Kreisbögen erfolgt beim erzeugenden Schneckenprofil, hier das linke, gegen den Uhrzeigersinn, und beim erzeugten Schneckenprofil, hier das rechte Schneckenprofil, mit dem Uhrzeigersinn. Alle Längenmaße sind auf den Abstand a zwischen den Drehpunkten DP1 und DP2 normiert. Der Koordinatenursprung befindet sich im Drehpunkt des jeweiligen Schneckenprofils. Die Angaben der Zentriwinkel - hier nur kurz Winkel genannt - erfolgen im Bogenmaß.

Tabelle 1B: Koordinaten der Schneckenprofile in Figur 1B

| Nr. | Radius | Winkel | SP-x | Sp-y | MP-x | MP-y |
|---|---|---|---|---|---|---|
| 1 | 0,555556 | 0,104720 | 0,555556 | 0,000000 | 0,000000 | 0,000000 |
| 2 | 1,000000 | 0,394862 | 0,552512 | 0,058071 | -0,336916 | -0,399003 |
| 3 | 0,477778 | 0,123590 | 0,308243 | 0,365045 | 0,000000 | 0,000000 |
| 4 | 1,000000 | 0,292775 | 0,260890 | 0,400260 | -0,285159 | -0,437493 |
| 5 | 0,522222 | 0,123590 | -0,004130 | 0,522206 | 0,000000 | 0,000000 |
| 6 | 1,000000 | 0,369983 | -0,068474 | 0,517714 | 0,433916 | -0,346928 |
| 7 | 0,444444 | 0,104720 | -0,347133 | 0,277542 | 0,000000 | 0,000000 |
| 8 | 1,000000 | 0,398155 | -0,374242 | 0,239736 | 0,467803 | -0,299670 |
| 9 | 0,533333 | 0,123590 | -0,517514 | -0,128934 | 0,000000 | 0,000000 |
| 10 | 1,000000 | 0,299258 | -0,497672 | -0,191747 | 0,295870 | 0,416768 |
| 11 | 0,488889 | 0,123590 | -0,283006 | -0,398647 | 0,000000 | 0,000000 |
| 12 | 1,000000 | 0,208894 | -0,231704 | -0,430494 | 0,242236 | 0,450062 |
| 13 | 0,511111 | 0,123590 | -0,038793 | -0,509637 | 0,000000 | 0,000000 |
| 14 | 1,000000 | 0,286428 | 0,024329 | -0,510532 | -0,315632 | 0,429908 |
| 15 | 0,466667 | 0,123590 | 0,276178 | -0,376169 | 0,000000 | 0,000000 |
| 16 | 1,000000 | 0,415747 | 0,320444 | -0,339254 | -0,366222 | 0,387719 |
| Nr. | Radius | Winkel | SP-x | Sp-y | MP-x | MP-y |
| 1' | 0,444444 | 0,104720 | -0,444444 | 0,000000 | 0,000000 | 0,000000 |
| 2' | 1,000000 | 0,369983 | -0,442010 | -0,046457 | 0,552512 | 0,058071 |
| 3' | 0,522222 | 0,123590 | -0,336916 | -0,399003 | 0,000000 | 0,000000 |
| 4' | 1,000000 | 0,292775 | -0,285159 | -0,437493 | -0,004130 | 0,522206 |
| 5' | 0,477778 | 0,123590 | 0,003778 | -0,477763 | 0,000000 | 0,000000 |
| 6' | 1,000000 | 0,394862 | 0,062646 | -0,473653 | -0,068474 | 0,517714 |
| 7' | 0,555556 | 0,104720 | 0,433916 | -0,346928 | 0,000000 | 0,000000 |
| 8' | 1,000000 | 0,415747 | 0,467803 | -0,299670 | -0,517514 | -0,128934 |
| 9' | 0,466667 | 0,123590 | 0,452825 | 0,112817 | 0,000000 | 0,000000 |
| 10' | 1,000000 | 0,286428 | 0,435463 | 0,167779 | -0,497672 | -0,191747 |
| 11' | 0,511111 | 0,123590 | 0,295870 | 0,416768 | 0,000000 | 0,000000 |
| 12' | 1,000000 | 0,208894 | 0,242236 | 0,450062 | -0,038793 | -0,509637 |
| 13' | 0,488889 | 0,123590 | 0,037106 | 0,487479 | 0,000000 | 0,000000 |
| 14' | 1,000000 | 0,299258 | -0,023271 | 0,488335 | 0,024329 | -0,510532 |
| 15' | 0,533333 | 0,123590 | -0,315632 | 0,429908 | 0,000000 | 0,000000 |
| 16' | 1,000000 | 0,398155 | -0,366222 | 0,387719 | 0,555556 | 0,000000 |

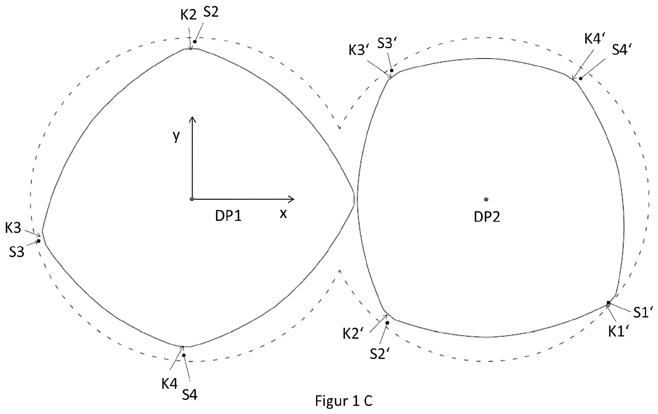

Figur 1C zeigt die zu den Figuren 1A und 1B zugehörigen praktisch abreinigenden Schneckenprofile, die bei der Fertigung der Schneckenelemente zugrunde gelegt werden. Diese Schneckenprofile wurden so berechnet, dass die Schneckenelemente sich räumlich mit einem äquidistanten Spiel gegenseitig abreinigen, also mit der Raumäquidistantenrechenvorschrift berechnet wurden. Alternativ können solche einander praktisch abreinigenden Schneckenprofile auch mit der Längsäquidistantenrechenvorschrift berechnet werden.

Tabelle 1C: kartesische Koordinaten der einander praktisch abreinigenden Schneckenprofile in Figur 1C abgelesen in 2°-Schritten in mathematisch positivem Richtungssinn, in Millimetern [mm], für Schneckenelemente für einen Doppelschneckenextruder mit einem Gehäuseinnendurchmesser von 100 mm und einem Achsabstand von 90 mm. Die Steigung der Schneckenelemente beträgt 100 mm, das Spiel zwischen den Schneckenelementen beträgt 1 mm, der Spalt zwischen den Schneckenelementen und dem Gehäuse beträgt 0,5 mm.

| Linke Welle | | Rechte Welle | |
|---|---|---|---|
| x (mm) | y (mm) | x (mm) | y (mm) |
| 49,156 | 0,000 | 42,141 | 0,000 |
| 49,495 | 0,726 | 41,944 | 1,465 |
| 49,306 | 4,383 | 41,723 | 2,918 |
| 48,928 | 5,143 | 41,479 | 4,360 |
| 48,093 | 6,759 | 41,212 | 5,792 |
| 47,240 | 8,330 | 40,920 | 7,215 |
| 46,372 | 9,857 | 40,606 | 8,631 |
| 45,487 | 11,341 | 40,267 | 10,040 |
| 44,588 | 12,786 | 39,892 | 11,439 |
| 43,676 | 14,191 | 39,469 | 12,824 |
| 42,750 | 15,560 | 38,997 | 14,194 |
| 41,811 | 16,893 | 38,481 | 15,547 |
| 40,859 | 18,192 | 37,938 | 16,891 |
| 39,895 | 19,458 | 37,371 | 18,227 |
| 38,919 | 20,694 | 36,780 | 19,556 |
| 37,931 | 21,899 | 36,165 | 20,880 |
| 36,930 | 23,076 | 35,524 | 22,198 |
| 35,916 | 24,226 | 34,858 | 23,512 |
| 34,890 | 25,349 | 34,165 | 24,822 |
| 33,851 | 26,447 | 33,444 | 26,129 |
| 32,798 | 27,521 | 32,695 | 27,434 |
| 31,732 | 28,572 | 31,916 | 28,737 |
| 30,651 | 29,600 | 31,106 | 30,039 |
| 29,556 | 30,606 | 30,265 | 31,340 |
| 28,445 | 31,592 | 29,390 | 32,641 |
| 27,415 | 32,476 | 28,481 | 33,942 |
| 26,166 | 33,490 | 27,535 | 35,243 |
| 24,981 | 34,383 | 26,551 | 36,545 |
| 23,766 | 35,234 | 25,948 | 37,376 |
| 22,524 | 36,045 | 24,111 | 38,586 |
| 20,989 | 36,992 | 22,750 | 39,404 |
| 19,992 | 37,600 | 21,296 | 40,051 |
| 18,703 | 38,346 | 19,262 | 40,730 |
| 17,396 | 39,073 | 18,212 | 40,906 |
| 16,072 | 39,779 | 16,680 | 41,285 |
| 14,728 | 40,465 | 15,153 | 41,634 |
| 13,365 | 41,132 | 13,631 | 41,953 |
| 11,980 | 41,779 | 12,113 | 42,242 |
| 10,573 | 42,406 | 10,597 | 42,503 |
| 9,143 | 43,013 | 9,084 | 42,736 |
| 7,688 | 43,600 | 7,572 | 42,942 |
| 6,207 | 44,166 | 6,060 | 43,120 |
| 4,699 | 44,711 | 4,548 | 43,271 |
| 3,163 | 45,235 | 3,034 | 43,394 |
| 1,597 | 45,736 | 1,518 | 43,474 |
| 0,000 | 46,214 | 0,607 | 43,496 |

(fortgesetzt)

| Linke Welle | | Rechte Welle | |
|---|---|---|---|
| x (mm) | y (mm) | x (mm) | y (mm) |
| -1,623 | 46,472 | -1,518 | 43,474 |
| -3,244 | 46,387 | -3,035 | 43,399 |
| -3,851 | 46,340 | -4,551 | 43,296 |
| -6,407 | 45,591 | -6,067 | 43,167 |
| -7,885 | 44,721 | -7,434 | 43,036 |
| -10,600 | 43,547 | -9,103 | 42,825 |
| -10,708 | 42,948 | -10,624 | 42,612 |
| -12,057 | 42,048 | -12,150 | 42,371 |
| -13,366 | 41,138 | -13,679 | 42,101 |
| -14,639 | 40,219 | -15,214 | 41,801 |
| -15,875 | 39,293 | -16,755 | 41,471 |
| -17,078 | 38,358 | -18,303 | 41,110 |
| -18,249 | 37,415 | -19,859 | 40,716 |
| -19,388 | 36,464 | -21,423 | 40,290 |
| -20,499 | 35,505 | -22,996 | 39,830 |
| -21,582 | 34,538 | -24,578 | 39,334 |
| -22,638 | 33,562 | -26,171 | 38,801 |
| -23,669 | 32,577 | -27,775 | 38,230 |
| -24,675 | 31,583 | -29,244 | 37,431 |
| -25,659 | 30,579 | -30,532 | 36,387 |
| -26,620 | 29,565 | -31,784 | 35,299 |
| -27,560 | 28,540 | -32,598 | 33,756 |
| -28,480 | 27,503 | -33,269 | 32,127 |
| -29,381 | 26,455 | -33,894 | 30,518 |
| -30,263 | 25,394 | -34,476 | 28,929 |
| -31,126 | 24,319 | -35,018 | 27,359 |
| -31,956 | 23,218 | -35,521 | 25,807 |
| -32,747 | 22,088 | -35,987 | 24,273 |
| -33,499 | 20,933 | -36,418 | 22,756 |
| -33,680 | 20,680 | -36,816 | 21,255 |
| -34,938 | 18,577 | -37,181 | 19,770 |
| -35,760 | 17,110 | -37,516 | 18,298 |
| -36,306 | 16,164 | -37,822 | 16,839 |
| -36,964 | 14,934 | -38,099 | 15,393 |
| -37,605 | 13,687 | -38,349 | 13,958 |
| -38,230 | 12,422 | -38,573 | 12,533 |
| -38,838 | 11,137 | -38,771 | 11,117 |
| -39,429 | 9,831 | -38,944 | 9,710 |
| -40,004 | 8,503 | -39,093 | 8,310 |
| -40,562 | 7,152 | -39,218 | 6,915 |
| -41,103 | 5,777 | -39,320 | 5,526 |
| -41,627 | 4,375 | -39,399 | 4,141 |
| -42,133 | 2,946 | -39,455 | 2,759 |
| -42,620 | 1,488 | -39,489 | 1,379 |
| -43,089 | 0,000 | -39,500 | 0,000 |
| -43,538 | -1,520 | -39,476 | -1,379 |
| -43,966 | -3,074 | -39,404 | -2,755 |
| -44,372 | -4,664 | -39,284 | -4,129 |
| -44,755 | -6,290 | -39,128 | -5,499 |

(fortgesetzt)

| Linke Welle | | Rechte Welle | |
|---|---|---|---|
| x (mm) | y (mm) | x (mm) | y (mm) |
| -45,114 | -7,955 | -38,951 | -6,868 |
| -45,447 | -9,660 | -38,750 | -8,237 |
| -45,753 | -11,407 | -38,527 | -9,606 |
| -45,660 | -13,093 | -38,281 | -10,977 |
| -45,175 | -14,678 | -38,011 | -12,350 |
| -44,635 | -16,246 | -37,716 | -13,728 |
| -43,676 | -17,646 | -37,397 | -15,109 |
| -42,629 | -18,980 | -37,052 | -16,496 |
| -41,572 | -20,276 | -36,680 | -17,890 |
| -40,503 | -21,536 | -36,282 | -19,291 |
| -39,423 | -22,761 | -35,855 | -20,701 |
| -38,333 | -23,953 | -35,398 | -22,119 |
| -37,232 | -25,113 | -34,911 | -23,548 |
| -36,120 | -26,242 | -34,392 | -24,987 |
| -34,996 | -27,342 | -33,840 | -26,438 |
| -33,862 | -28,413 | -33,252 | -27,902 |
| -32,716 | -29,457 | -32,628 | -29,379 |
| -31,557 | -30,475 | -31,966 | -30,869 |
| -30,387 | -31,466 | -31,263 | -32,374 |
| -29,203 | -32,433 | -30,518 | -33,894 |
| -28,006 | -33,376 | -29,728 | -35,429 |
| -26,795 | -34,296 | -29,415 | -36,014 |
| -25,175 | -35,477 | -27,332 | -37,619 |
| -24,325 | -36,063 | -26,002 | -38,550 |
| -23,051 | -36,890 | -24,411 | -39,066 |
| -21,750 | -37,672 | -23,026 | -39,389 |
| -20,422 | -38,408 | -21,228 | -39,924 |
| -18,226 | -39,517 | -19,656 | -40,301 |
| -17,717 | -39,794 | -18,096 | -40,645 |
| -16,344 | -40,452 | -16,548 | -40,957 |
| -14,955 | -41,088 | -15,009 | -41,237 |
| -13,549 | -41,701 | -13,480 | -41,488 |
| -12,127 | -42,291 | -11,960 | -41,710 |
| -10,686 | -42,859 | -10,448 | -41,903 |
| -9,226 | -43,404 | -8,942 | -42,068 |
| -7,745 | -43,927 | -7,442 | -42,206 |
| -6,244 | -44,426 | -5,947 | -42,317 |
| -4,719 | -44,903 | -4,457 | -42,402 |
| -3,172 | -45,355 | -2,969 | -42,461 |
| -1,588 | -45,472 | -1,484 | -42,494 |
| -0,199 | -45,500 | 0,000 | -42,501 |
| 1,588 | -45,466 | 1,483 | -42,474 |
| 3,141 | -44,915 | 2,965 | -42,396 |
| 4,661 | -44,342 | 4,442 | -42,267 |
| 7,071 | -43,611 | 5,915 | -42,087 |
| 7,607 | -43,140 | 7,383 | -41,874 |
| 9,036 | -42,511 | 8,850 | -41,635 |
| 10,438 | -41,863 | 10,747 | -41,260 |
| 11,813 | -41,198 | 11,779 | -41,079 |

(fortgesetzt)

| Linke Welle | | Rechte Welle | |
| --- | --- | --- | --- |
| x (mm) | y (mm) | x (mm) | y (mm) |
| 13,164 | -40,515 | 13,244 | -40,760 |
| 14,492 | -39,815 | 14,710 | -40,415 |
| 15,796 | -39,098 | 16,178 | -40,042 |
| 17,080 | -38,363 | 17,649 | -39,641 |
| 18,344 | -37,610 | 19,124 | -39,210 |
| 19,588 | -36,840 | 20,603 | -38,749 |
| 20,814 | -36,051 | 22,087 | -38,257 |
| 22,023 | -35,245 | 23,578 | -37,733 |
| 23,216 | -34,419 | 25,075 | -37,175 |
| 24,393 | -33,574 | 26,579 | -36,583 |
| 25,550 | -32,702 | 28,092 | -35,956 |
| 26,676 | -31,791 | 29,612 | -35,291 |
| 27,769 | -30,841 | 31,142 | -34,587 |
| 28,829 | -29,854 | 32,681 | -33,842 |
| 29,869 | -28,844 | 34,229 | -33,055 |
| 30,892 | -27,816 | 35,788 | -32,224 |
| 31,900 | -26,768 | 37,356 | -31,346 |
| 32,894 | -25,699 | 38,935 | -30,419 |
| 33,873 | -24,610 | 40,046 | -29,095 |
| 34,837 | -23,498 | 41,037 | -27,680 |
| 35,789 | -22,363 | 41,496 | -25,929 |
| 36,727 | -21,204 | 41,519 | -24,594 |
| 37,652 | -20,020 | 42,045 | -22,356 |
| 38,564 | -18,809 | 42,114 | -20,906 |
| 39,463 | -17,570 | 42,436 | -18,894 |
| 40,349 | -16,302 | 42,577 | -17,202 |
| 41,223 | -15,004 | 42,683 | -15,535 |
| 42,083 | -13,674 | 42,757 | -13,893 |
| 42,930 | -12,310 | 42,800 | -12,273 |
| 43,764 | -10,912 | 42,813 | -10,674 |
| 44,583 | -9,476 | 42,796 | -9,097 |
| 45,388 | -8,003 | 42,752 | -7,538 |
| 46,176 | -6,490 | 42,681 | -5,998 |
| 46,949 | -4,935 | 42,584 | -4,476 |
| 47,704 | -3,336 | 42,461 | -2,969 |
| 48,440 | -1,692 | 42,313 | -1,478 |
| 49,156 | 0,000 | 42,141 | 0,000 |

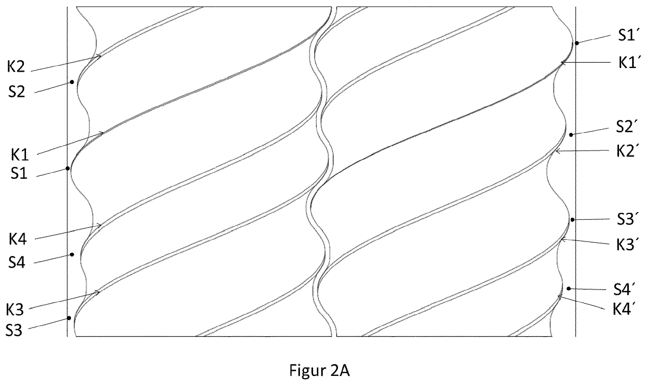

Die Figuren 2A bis 2C zeigen ein weiteres Beispiel viergängiger Schneckenelemente. Dabei zeigen die Figuren 2A bis 2C eine Ausführungsform, bei der der Kammwinkel desjenigen Schneckenkammes, der den engsten Spalt zur Gehäusewand aufweist, nämlich der Kamm K1, am kleinsten ist; dies ist erfindungsgemäß bevorzugt. Das Verhältnis a/dg von Achsabstand a zu Gehäuseinnendurchmesser dg beträgt auch hier 0,899 und ist somit kleiner als 0,924.

Das Paar viergängiger Schneckenelemente aus den Figuren 2A bis 2C ist außerdem durch folgende dimensionslose Kenngrößen gekennzeichnet: Steigung/Gehäuseinnendurchmesser dg = 1,232, Gehäusespalt/Gehäuseinnendurchmesser dg = 0,0123, Schneckenspalt /Gehäuseinnendurchmesser dg = 0,0185.

Figur 2A zeigt das Paar erfindungsgemäßer viergängiger Schneckenelemente in der Aufsicht als einander praktisch abreinigendes Paar Schneckenelemente. Die Gehäusewand ist in Figur 2A durch vertikale Linien angedeutet. Die Kämme K1 bis K4 und K1'bis K4'sowie die Spalte S1 bis S4 und S1'bis S4'sind in der Abbildung gekennzeichnet.

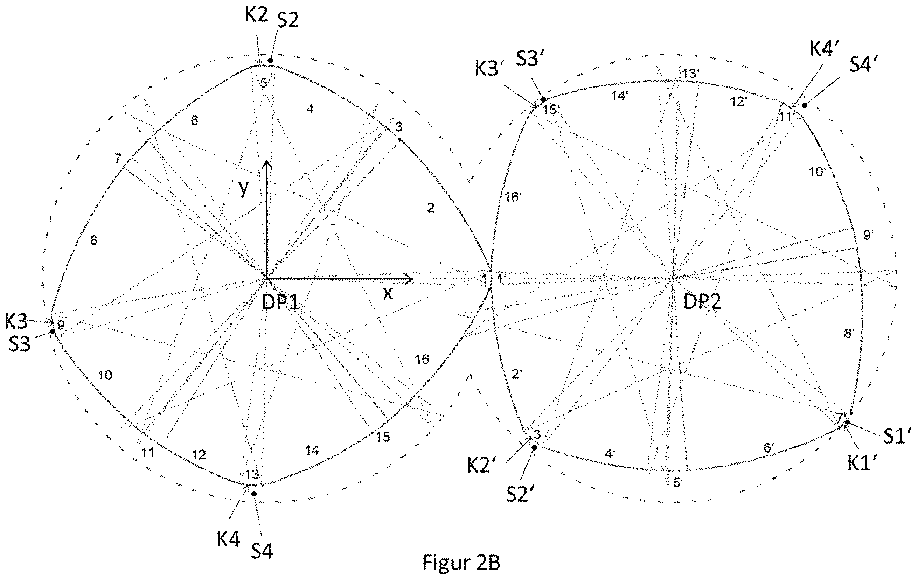

Figur 2B zeigt die Schneckenprofile der zwei einander exakt abreinigender Schneckenelemente, die zur Konstruktion der praktisch abreinigenden Schneckenlemente aus Figur 2A zu Grunde gelegt wurden. Hier existiert kein Spiel zwischen den Schneckenelementen bei der gegenseitigen Reinigung der Schneckenelemente. Die Drehpunkte der beiden Schneckenelemente des Paares Schneckenelemente sind wiederum mit DP1 und DP2 bezeichnet. Ebenso ist der Spalt S1 bzw. S1' zwischen dem Schneckenkamm K1 bzw. K1' und dem Gehäuse (hier durch eine gestrichelt dargestellte Linie wiedergegeben) gleich Null. Die Kreisbögen, aus denen sich die Schneckenprofile zusammensetzen, sind beim linken Schneckenprofil mit den Ziffern 1 bis 16 bezeichnet und beim rechten Schneckenprofil mit den Ziffern 1' bis 16'. Die Spalte zwischen den Schneckenkämmen und der Gehäusewand tragen die Bezeichnungen S1 bis S4 beim linken Schneckenelement und S1' bis S4' beim rechten Schneckenelement. Der Spalt S1 ist in der Darstellung von Figur 2B nicht zu sehen, weil das linke Schneckenelement in der gezeigten Position gerade das benachbarte Schneckenelement abreinigt.

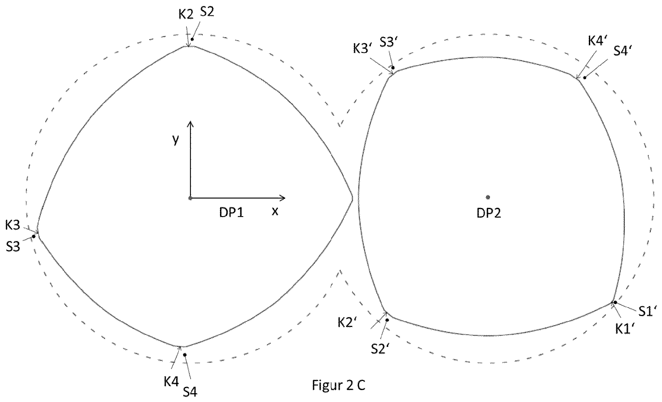

Die Schneckenprofile der Schneckenelemente der Figur 2B setzen sich nur aus Kreisbögen zusammen. In der folgenden Tabelle 2 sind für die Schneckenprofile aus den Figuren 2 mit den Kreisbögen 1 bis 16 und 1' bis 16' die Radien, die Winkel, die Koordinaten der Kreismittelpunkte (MP) und die Koordinaten der Startpunkte (SP) der jeweiligen Kreisbögen aufgeführt. Alle Längenmaße sind auf den Achsabstand a zwischen den Drehpunkten DP 1 und DP2 normiert. Der Koordinatenursprung befindet sich im Drehpunkt des jeweiligen Schneckenprofils. Die Angaben Zentriwinkel - hier nur kurz Winkel genannt - erfolgen im Bogenmaß.

Tabelle 2B: Koordinaten der Schneckenprofile in Figur 2B

| Nr. | Radius | Winkel | SP-x | SP-y | MP-x | MP-y |
|---|---|---|---|---|---|---|
| 1 | 0.552740 | 0.069814 | 0.555828 | -0.019290 | 0.003425 | 0.000000 |
| 2 | 1.000000 | 0.393303 | 0.555828 | 0.019290 | -0.362196 | -0.377235 |
| 3 | 0.474658 | 0.110021 | 0.333770 | 0.340839 | 0.003425 | 0.000000 |
| 4 | 1.000000 | 0.311874 | 0.294349 | 0.375050 | -0.318566 | -0.415099 |
| 5 | 0.525342 | 0.110021 | 0.022331 | 0.525002 | 0.003425 | 0.000000 |
| 6 | 1.000000 | 0.372822 | -0.035428 | 0.523904 | 0.415074 | -0.368872 |
| 7 | 0.447260 | 0.069814 | -0.329669 | 0.298480 | 0.003425 | 0.000000 |
| 8 | 1.000000 | 0.407502 | -0.349679 | 0.274517 | 0.439802 | -0.339258 |
| 9 | 0.539041 | 0.110021 | -0.528281 | -0.088627 | 0.003425 | 0.000000 |
| 10 | 1.000000 | 0.320394 | -0.515335 | -0.146472 | 0.321806 | 0.400516 |
| 11 | 0.488356 | 0.110021 | -0.300465 | -0.382286 | 0.003425 | 0.000000 |
| 12 | 1.000000 | 0.213750 | -0.256653 | -0.413341 | 0.275905 | 0.433052 |
| 13 | 0.511644 | 0.110021 | -0.064991 | -0.507049 | 0.003425 | 0.000000 |
| 14 | 1.000000 | 0.303574 | -0.008904 | -0.511495 | -0.300883 | 0.444930 |
| 15 | 0.460959 | 0.110021 | 0.263652 | -0.380480 | 0.003425 | 0.000000 |
| 16 | 1.000000 | 0.418497 | 0.303855 | -0.349607 | -0.347896 | 0.408827 |

| Nr. | Radius | Winkel | SP-x | SP-y | MP-x | MP-y |
|---|---|---|---|---|---|---|
| 1' | 0.447260 | 0.069814 | -0.443563 | 0.015609 | 0.003425 | -0.000000 |
| 2' | 1.000000 | 0.372822 | -0.443563 | -0.015609 | 0.555828 | 0.019290 |
| 3' | 0.525342 | 0.110021 | -0.362196 | -0.377235 | 0.003425 | -0.000000 |
| 4' | 1.000000 | 0.311874 | -0.318566 | -0.415099 | 0.022331 | 0.525002 |
| 5' | 0.474658 | 0.110021 | -0.013657 | -0.474350 | 0.003425 | -0.000000 |
| 6' | 1.000000 | 0.393303 | 0.038529 | -0.473358 | -0.035428 | 0.523904 |
| 7' | 0.552740 | 0.069814 | 0.415074 | -0.368872 | 0.003425 | -0.000000 |
| 8' | 1.000000 | 0.418498 | 0.439802 | -0.339258 | -0.528281 | -0.088627 |
| 9' | 0.460959 | 0.110021 | 0.458110 | 0.075789 | 0.003425 | -0.000000 |
| 10' | 1.000000 | 0.303574 | 0.447040 | 0.125255 | -0.515335 | -0.146472 |
| 11' | 0.511644 | 0.110021 | 0.321806 | 0.400516 | 0.003425 | -0.000000 |
| 12' | 1.000000 | 0.213750 | 0.275905 | 0.433052 | -0.064991 | -0.507049 |
| 13' | 0.488356 | 0.110021 | 0.068727 | 0.483970 | 0.003425 | -0.000000 |
| 14' | 1.000000 | 0.320394 | 0.015192 | 0.488214 | -0.008904 | -0.511495 |
| 15' | 0.539041 | 0.110021 | -0.300883 | 0.444930 | 0.003425 | -0.000000 |
| 16' | 1.000000 | 0.407502 | -0.347896 | 0.408827 | 0.555828 | -0.019290 |

Figur 2C zeigt die zu den Figuren 2A und 2B zugehörigen praktisch abreinigenden Schneckenprofile, die bei der Fertigung der Schneckenelemente zugrunde gelegt werden. Diese Schneckenprofile wurden so berechnet, dass die Schneckenelemente sich räumlich mit einem äquidistanten Spiel gegenseitig abreinigen, also mit der Raumäquidistantenrechenvorschrift berechnet wurden. Alternativ können solche einander praktisch abreinigenden Schneckenprofile auch mit der Längsäquidistantenrechenvorschrift berechnet werden.

Tabelle 2C: kartesische Koordinaten der einander praktisch abreinigenden Schneckenprofile in Figur 2C abgelesen in 2°-Schritten in mathematisch positivem Richtungssinn, in Millimetern [mm], für Schneckenelemente für einen Doppelschneckenextruder mit einem Gehäuseinnendurchmesser von 162,4 mm und einem Achsabstand von 146 mm. Die Steigung der Schneckenelemente beträgt 200 mm, das Spiel zwischen den Schneckenelementen beträgt 3 mm, der Spalt zwischen den Schneckenelementen und dem Gehäuse beträgt 2 mm.

| Linke Welle | | Rechte Welle | |
|---|---|---|---|
| x (mm) | y (mm) | x (mm) | y (mm) |
| 78,418 | 0,000 | 66,485 | 0,000 |
| 79,178 | 1,852 | 66,225 | 2,313 |
| 79,109 | 3,786 | 65,928 | 4,610 |
| 78,346 | 5,479 | 65,594 | 6,894 |
| 77,101 | 8,104 | 65,221 | 9,166 |
| 75,825 | 10,657 | 64,811 | 11,428 |
| 74,521 | 13,140 | 64,486 | 13,085 |
| 73,191 | 15,557 | 63,845 | 15,918 |
| 71,835 | 17,911 | 62,664 | 20,071 |
| 70,455 | 20,203 | 62,580 | 20,333 |
| 69,053 | 22,437 | 61,856 | 22,514 |
| 67,627 | 24,614 | 61,095 | 24,684 |
| 66,180 | 26,738 | 60,296 | 26,845 |
| 64,711 | 28,811 | 59,457 | 28,999 |
| 63,221 | 30,835 | 58,579 | 31,147 |
| 61,710 | 32,812 | 57,660 | 33,290 |
| 60,177 | 34,743 | 56,699 | 35,430 |
| 58,623 | 36,632 | 55,695 | 37,567 |
| 57,048 | 38,479 | 54,646 | 39,702 |
| 55,450 | 40,287 | 53,550 | 41,838 |
| 53,830 | 42,057 | 52,407 | 43,974 |
| 52,187 | 43,790 | 51,213 | 46,113 |
| 50,520 | 45,488 | 49,968 | 48,254 |
| 48,828 | 47,153 | 48,669 | 50,398 |
| 47,111 | 48,785 | 47,313 | 52,546 |
| 45,446 | 50,314 | 45,898 | 54,700 |
| 43,581 | 51,938 | 44,422 | 56,858 |
| 41,742 | 53,427 | 42,882 | 59,022 |
| 39,670 | 54,983 | 42,414 | 59,660 |
| 37,923 | 56,223 | 37,624 | 62,791 |
| 35,968 | 57,561 | 36,475 | 63,176 |
| 33,988 | 58,868 | 34,010 | 63,964 |
| 31,979 | 60,144 | 31,556 | 64,699 |
| 29,941 | 61,389 | 29,111 | 65,383 |
| 27,873 | 62,604 | 26,673 | 66,017 |
| 25,772 | 63,789 | 24,241 | 66,603 |
| 23,637 | 64,943 | 21,815 | 67,140 |
| 21,467 | 66,069 | 19,393 | 67,632 |
| 19,259 | 67,164 | 16,974 | 68,078 |
| 17,011 | 68,229 | 14,556 | 68,479 |
| 14,722 | 69,263 | 12,138 | 68,835 |

(fortgesetzt)

| Linke Welle | | Rechte Welle | |
|---|---|---|---|
| x (mm) | y (mm) | x (mm) | y (mm) |
| 12,390 | 70,266 | 9,718 | 69,148 |
| 10,012 | 71,238 | 7,296 | 69,418 |
| 7,586 | 72,177 | 6,896 | 69,458 |
| 5,110 | 73,082 | 2,436 | 69,757 |
| 2,582 | 73,953 | -0,743 | 69,796 |
| 0,000 | 74,787 | -2,436 | 69,767 |
| -1,312 | 75,189 | -4,873 | 69,689 |
| -6,502 | 74,918 | -7,312 | 69,568 |
| -7,803 | 74,239 | -9,754 | 69,403 |
| -10,246 | 72,906 | -12,201 | 69,193 |
| -12,617 | 71,553 | -14,653 | 68,939 |
| -14,917 | 70,180 | -17,114 | 68,639 |
| -17,151 | 68,790 | -19,583 | 68,292 |
| -19,321 | 67,382 | -22,062 | 67,899 |
| -21,431 | 65,957 | -24,552 | 67,457 |
| -23,482 | 64,518 | -27,055 | 66,965 |
| -25,479 | 63,062 | -29,573 | 66,421 |
| -27,423 | 61,592 | -32,105 | 65,825 |
| -29,316 | 60,108 | -34,654 | 65,175 |
| -31,162 | 58,608 | -37,220 | 64,468 |
| -32,963 | 57,093 | -39,805 | 63,702 |
| -34,720 | 55,563 | -42,410 | 62,875 |
| -36,435 | 54,018 | -45,035 | 61,985 |
| -38,111 | 52,456 | -46,911 | 61,312 |
| -39,750 | 50,877 | -50,972 | 57,980 |
| -41,352 | 49,281 | -51,389 | 57,074 |
| -42,920 | 47,667 | -52,556 | 54,423 |
| -44,454 | 46,034 | -53,645 | 51,805 |
| -45,957 | 44,381 | -54,662 | 49,218 |
| -47,430 | 42,706 | -55,609 | 46,662 |
| -48,981 | 40,882 | -56,491 | 44,136 |
| -50,275 | 39,279 | -57,310 | 41,638 |
| -51,700 | 37,383 | -58,069 | 39,168 |
| -52,907 | 35,687 | -58,772 | 36,725 |
| -54,171 | 33,850 | -59,420 | 34,306 |
| -55,406 | 31,989 | -60,016 | 31,911 |
| -56,614 | 30,102 | -60,563 | 29,539 |
| -57,796 | 28,189 | -61,062 | 27,186 |
| -58,951 | 26,247 | -61,514 | 24,853 |
| -60,080 | 24,274 | -61,922 | 22,538 |
| -61,184 | 22,269 | -62,287 | 20,238 |
| -62,262 | 20,230 | -62,611 | 17,953 |
| -63,316 | 18,155 | -62,893 | 15,681 |
| -64,343 | 16,043 | -63,136 | 13,420 |
| -65,345 | 13,889 | -63,341 | 11,169 |
| -66,321 | 11,694 | -63,507 | 8,925 |
| -67,270 | 9,454 | -63,635 | 6,688 |
| -68,191 | 7,167 | -63,727 | 4,456 |
| -69,085 | 4,831 | -63,782 | 2,227 |

(fortgesetzt)

| Linke Welle | | Rechte Welle | |
|---|---|---|---|
| x (mm) | y (mm) | x (mm) | y (mm) |
| -69,949 | 2,443 | -63,800 | 0,000 |
| -70,783 | 0,000 | -63,761 | -2,227 |
| -71,584 | -2,500 | -63,645 | -4,450 |
| -72,352 | -5,059 | -63,471 | -6,671 |
| -73,085 | -7,681 | -63,261 | -8,891 |
| -73,779 | -10,369 | -63,014 | -11,111 |
| -74,433 | -13,125 | -62,729 | -13,334 |
| -75,043 | -15,951 | -62,407 | -15,560 |
| -75,276 | -17,130 | -62,046 | -17,791 |
| -73,940 | -22,197 | -61,646 | -20,030 |
| -72,920 | -23,693 | -61,206 | -22,277 |
| -71,316 | -25,957 | -60,724 | -24,534 |
| -69,691 | -28,157 | -60,199 | -26,802 |
| -68,046 | -30,296 | -59,631 | -29,084 |
| -66,382 | -32,376 | -59,016 | -31,380 |
| -64,698 | -34,401 | -58,355 | -33,691 |
| -62,996 | -36,371 | -57,644 | -36,020 |
| -61,276 | -38,289 | -56,882 | -38,368 |
| -59,537 | -40,158 | -56,067 | -40,735 |
| -57,779 | -41,979 | -55,196 | -43,124 |
| -56,002 | -43,753 | -54,266 | -45,534 |
| -54,205 | -45,483 | -53,275 | -47,969 |
| -52,388 | -47,171 | -52,219 | -50,427 |
| -50,551 | -48,817 | -51,096 | -52,911 |
| -48,692 | -50,422 | -49,901 | -55,421 |
| -46,812 | -51,990 | -49,167 | -56,900 |
| -44,908 | -53,519 | -45,110 | -60,168 |
| -42,981 | -55,013 | -43,992 | -60,549 |
| -41,499 | -56,124 | -41,408 | -61,391 |
| -39,032 | -57,867 | -38,848 | -62,170 |
| -35,100 | -60,333 | -36,310 | -62,891 |
| -34,900 | -60,449 | -33,793 | -63,555 |
| -32,781 | -61,652 | -31,295 | -64,164 |
| -30,638 | -62,818 | -28,816 | -64,721 |
| -28,471 | -63,948 | -26,353 | -65,227 |
| -26,279 | -65,042 | -23,907 | -65,684 |
| -24,059 | -66,100 | -21,475 | -66,093 |
| -21,810 | -67,124 | -19,056 | -66,456 |
| -19,531 | -68,111 | -16,649 | -66,774 |
| -17,220 | -69,064 | -14,251 | -67,048 |
| -14,875 | -69,981 | -11,863 | -67,278 |
| -12,495 | -70,862 | -9,482 | -67,466 |
| -10,078 | -71,706 | -7,106 | -67,611 |
| -7,621 | -72,514 | -4,735 | -67,715 |
| -6,291 | -72,929 | -2,367 | -67,778 |
| -0,575 | -73,198 | -0,071 | -67,800 |
| 0,000 | -73,012 | 2,366 | -67,759 |
| 2,520 | -72,163 | 4,729 | -67,635 |
| 4,984 | -71,281 | 7,358 | -67,400 |

(fortgesetzt)

| Linke Welle | | Rechte Welle | |
|---|---|---|---|
| x (mm) | y (mm) | x (mm) | y (mm) |
| 7,396 | -70,367 | 9,438 | -67,156 |
| 9,757 | -69,422 | 11,786 | -66,842 |
| 12,069 | -68,447 | 14,132 | -66,487 |
| 14,336 | -67,444 | 16,478 | -66,091 |
| 16,558 | -66,412 | 18,825 | -65,652 |
| 18,739 | -65,352 | 21,175 | -65,170 |
| 20,881 | -64,265 | 23,528 | -64,643 |
| 22,985 | -63,151 | 25,887 | -64,072 |
| 25,053 | -62,009 | 28,252 | -63,455 |
| 27,088 | -60,840 | 30,625 | -62,791 |
| 29,090 | -59,644 | 33,007 | -62,078 |
| 31,062 | -58,419 | 35,400 | -61,314 |
| 33,005 | -57,167 | 37,804 | -60,499 |
| 34,921 | -55,886 | 40,220 | -59,629 |
| 36,811 | -54,575 | 42,650 | -58,703 |
| 38,677 | -53,234 | 45,095 | -57,719 |
| 39,028 | -52,976 | 47,555 | -56,674 |
| 42,295 | -50,406 | 50,031 | -55,565 |
| 44,589 | -48,389 | 52,524 | -54,390 |
| 45,715 | -47,339 | 55,034 | -53,146 |
| 47,374 | -45,748 | 57,563 | -51,830 |
| 49,008 | -44,127 | 61,888 | -49,422 |
| 50,619 | -42,475 | 63,085 | -47,884 |
| 52,208 | -40,789 | 63,506 | -46,140 |
| 53,774 | -39,069 | 64,146 | -43,267 |
| 55,319 | -37,313 | 64,717 | -40,439 |
| 56,844 | -35,520 | 65,220 | -37,655 |
| 58,348 | -33,687 | 65,660 | -34,912 |
| 59,833 | -31,814 | 66,039 | -32,209 |
| 61,298 | -29,897 | 66,360 | -29,546 |
| 62,743 | -27,935 | 66,627 | -26,919 |
| 64,169 | -25,926 | 66,841 | -24,328 |
| 65,576 | -23,868 | 67,005 | -21,771 |
| 66,963 | -21,757 | 67,121 | -19,247 |
| 68,329 | -19,593 | 67,190 | -16,752 |
| 69,675 | -17,372 | 67,214 | -14,287 |
| 70,999 | -15,091 | 67,195 | -11,848 |
| 72,301 | -12,749 | 67,133 | -9,435 |
| 73,578 | -10,341 | 67,031 | -7,045 |
| 74,831 | -7,865 | 66,888 | -4,677 |
| 76,056 | -5,318 | 66,706 | -2,329 |
| 77,253 | -2,698 | 66,485 | 0,000 |

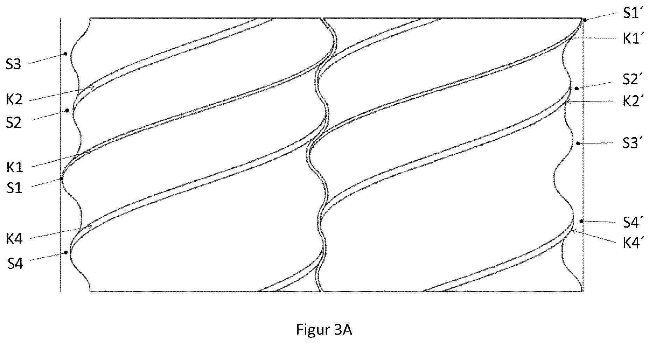

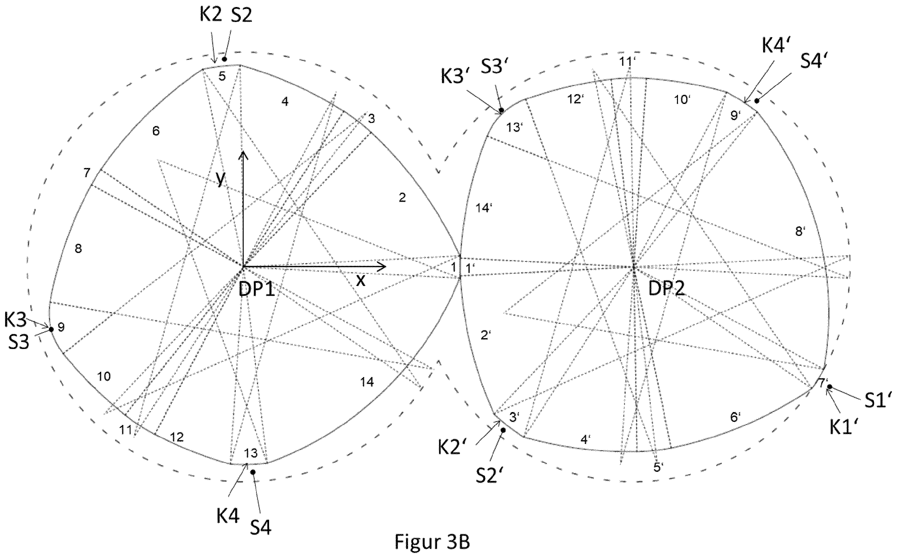

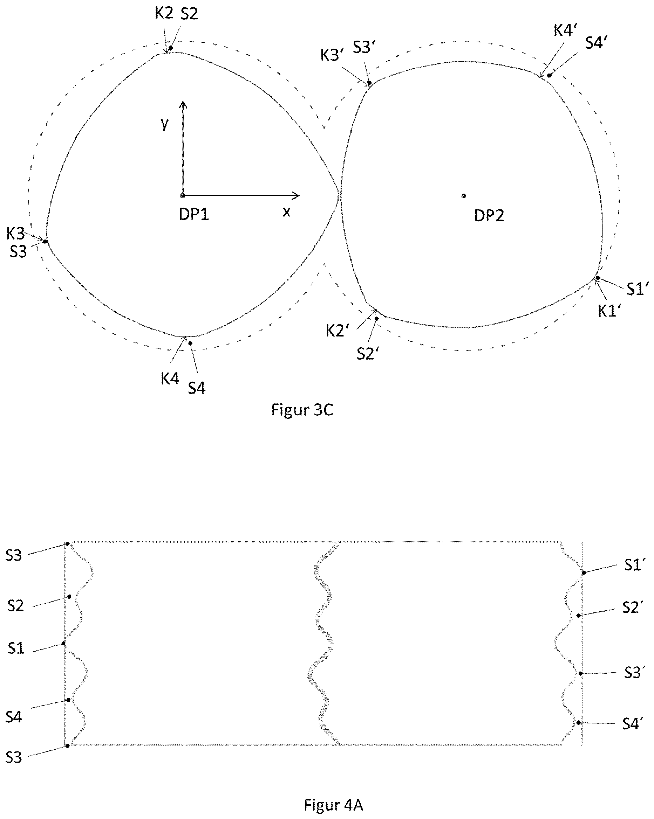

Die Figuren 3A, 3B und 3C zeigen ein weiteres erfindungsgemäßes Paar viergängiger Schneckenelemente, wobei dieses Paar Schneckenelemente sich dadurch auszeichnet, dass an einem Kamm, hier Kamm 3 bzw. Kamm 3', das Schneckenprofil keine Knicke aufweist, das Schneckenprofil am Kamm 3 bzw. Kamm 3' also stetig differenzierbar ist, und das Schneckenelement somit an dieser Stelle keine Kanten hat. Das Verhältnis a/dg von Achsabstand a zu Gehäuseinnendurchmesser dg beträgt hier 0,9 und ist somit kleiner als 0,924.

Figur 3A zeigt das Paar viergängiger Schneckenelemente als einander praktisch abreinigendes Paar Schneckenelemente in der Aufsicht. Die Gehäusewand ist in Figur 3A durch vertikale Linien angedeutet. Die Kämme K1, K2 und K4 sowie K1', K2'und K4'sowie die Spalte S1 bis S4 und S1'bis S4'sind in der Abbildung gekennzeichnet. Die Kämme K3 und K3' sind in dieser Darstellung nicht zu erkennen, da sie keine Kanten aufweisen.

Figur 3B zeigt das Paar viergängiger Schneckenelemente im Querschnitt. Die Drehpunkte der beiden Schneckenelemente des Paares Schneckenelemente sind wiederum mit DP1 und DP2 bezeichnet. Die Kontur des Gehäuses ist durch eine gestrichelte Linie wiedergegeben. Die Kreisbögen, aus denen sich die Schneckenprofile zusammensetzen, sind beim linken Schneckenprofil mit den Ziffern 1 bis 14 bezeichnet und beim rechten Schneckenprofil mit den Ziffern 1' bis 14'. Die Spalte zwischen den Schneckenkämmen und der Gehäusewand tragen die Bezeichnungen S1 bis S4 beim linken Schneckenelement und S1' bis S4' beim rechten Schneckenelement. Der Spalt S1 ist in der Darstellung von Figur 1B nicht zu sehen, weil das linke Schneckenelement in der gezeigten Position gerade das benachbarte Schneckenelement reinigt.

Die Figur 3B zeigt das Schneckenprofil zweier einander exakt abreinigender Schneckenelemente, d.h. es existiert kein Spiel zwischen den Schneckenelementen bei der gegenseitigen Reinigung der Schneckenelemente. Ebenso ist der Spalt S1 bzw. S1' zwischen dem Schneckenkamm K1 bzw. K1' und dem Gehäuse gleich Null.

Figur 3C zeigt das Schneckenquerschnittsprofil aus der Abbildung 3B, jedoch mit einem Spalt bei der gegenseitigen Abreinigung der Schneckenelemente, sowie bei der Abreinigung der Gehäusewand durch die Kämme K1 und K1'. Die Schneckenprofile der Schneckenelemente wurde dabei mit der Raumäquidistantenrechenvorschrift ermittelt. Alternativ können solche einander praktisch abreinigenden Schneckenprofile auch mit der Längsäquidistantenrechenvorschrift berechnet werden.

Die Schneckenprofile der Schneckenelemente der Figur 3B setzen sich gemäß einer bevorzugten Ausführungsform der Erfindung nur aus Kreisbögen zusammen. In der folgenden Tabelle 3 sind für die Schneckenprofile aus den Figuren 3A und 3B mit den Kreisbögen 1 bis 14 und 1' bis 14' die Radien, die Winkel, die Koordinaten der Kreismittelpunkte (MP) und die Koordinaten der Startpunkte (SP) der jeweiligen Kreisbögen aufgeführt. Alle Längenmaße sind auf den Achsabstand a zwischen den Drehpunkten DP1 und DP2 normiert. Der Koordinatenursprung befindet sich im Drehpunkt des jeweiligen Schneckenprofils. Die Angaben Zentriwinkel - hier nur kurz Winkel genannt - erfolgen im Bogenmaß.

Tabelle 3B: Koordinaten der exakt abreinigenden Schneckenprofile in Figur 3B

Linke Welle

| Nr. | Radius | Winkel | S-Punkt-x | S-Punkt-y | M-Punkt-x | M-Punkt-y |
|---|---|---|---|---|---|---|
| 1 | 0,555556 | 0,104720 | 0,555556 | 0,000000 | 0,000000 | 0,000000 |
| 2 | 1,000000 | 0,394862 | 0,552512 | 0,058071 | -0,336916 | -0,399003 |
| 3 | 0,477778 | 0,185385 | 0,308243 | 0,365045 | 0,000000 | 0,000000 |
| 4 | 1,000000 | 0,292775 | 0,235674 | 0,415607 | -0,257597 | -0,454269 |
| 5 | 0,522222 | 0,185385 | -0,036371 | 0,520954 | 0,000000 | 0,000000 |
| 6 | 1,000000 | 0,369983 | -0,131773 | 0,505324 | 0,473374 | -0,290790 |
| 7 | 0,444444 | 0,104720 | -0,378699 | 0,232632 | 0,000000 | 0,000000 |
| 8 | 1,000000 | 0,323823 | -0,400941 | 0,191773 | 0,501177 | -0,239716 |
| 9 | 0,166667 | 0,850839 | -0,491351 | -0,117702 | -0,325930 | -0,138037 |
| 10 | 1,000000 | 0,224926 | -0,450290 | -0,248998 | 0,295870 | 0,416768 |
| 11 | 0,488889 | 0,185385 | -0,283006 | -0,398647 | 0,000000 | 0,000000 |
| 12 | 1,000000 | 0,208894 | -0,204676 | -0,443982 | 0,213980 | 0,464163 |
| 13 | 0,511111 | 0,185385 | -0,007246 | -0,511060 | 0,000000 | 0,000000 |
| 14 | 0,833333 | 0,850839 | 0,087080 | -0,503638 | -0,234466 | 0,265161 |

Rechte Welle

| | Radius | Winkel | S-Punkt-x | S-Punkt-y | M-Punkt-x | M-Punkt-y |
|---|---|---|---|---|---|---|
| 1' | 0,444444 | 0,104720 | -0,444444 | 0,000000 | 0,000000 | 0,000000 |
| 2' | 1,000000 | 0,369983 | -0,442010 | -0,046457 | 0,552512 | 0,058071 |
| 3' | 0,522222 | 0,185385 | -0,336916 | -0,399003 | 0,000000 | 0,000000 |
| 4' | 1,000000 | 0,292775 | -0,257597 | -0,454269 | -0,036371 | 0,520954 |
| 5' | 0,477778 | 0,185385 | 0,033276 | -0,476618 | 0,000000 | 0,000000 |
| 6' | 1,000000 | 0,394862 | 0,120558 | -0,462317 | -0,131773 | 0,505324 |
| 7' | 0,555556 | 0,104720 | 0,473374 | -0,290790 | 0,000000 | 0,000000 |
| 8' | 0,833333 | 0,850839 | 0,501177 | -0,239716 | -0,325930 | -0,138037 |
| 9' | 0,511111 | 0,185385 | 0,295870 | 0,416768 | 0,000000 | 0,000000 |
| 10' | 1,000000 | 0,208894 | 0,213980 | 0,464163 | -0,007246 | -0,511060 |

(fortgesetzt)

Rechte Welle

| | Radius | Winkel | S-Punkt-x | S-Punkt-y | M-Punkt-x | M-Punkt-y |
|---|---|---|---|---|---|---|
| 11' | 0,488889 | 0,185385 | 0,006931 | 0,488840 | 0,000000 | 0,000000 |
| 12' | 1,000000 | 0,224926 | -0,083294 | 0,481741 | 0,087080 | -0,503638 |
| 13' | 0,166667 | 0,850839 | -0,298775 | 0,418921 | -0,234466 | 0,265161 |
| 14' | 1,000000 | 0,323823 | -0,392470 | 0,318193 | 0,555556 | 0,000000 |

Tabelle 3C: kartesische Koordinaten der einander praktisch abreinigenden Schneckenprofile in Figur 2C abgelesen in 2°-Schritten in mathematisch positivem Richtungssinn, in Millimetern [mm], für Schneckenelemente für einen Doppelschneckenextruder mit einem Gehäuseinnendurchmesser von 100 mm und einem Achsabstand von 90 mm. Die Steigung der Schneckenelemente beträgt 100 mm, das Spiel zwischen den Schneckenelementen beträgt 1 mm, der Spalt zwischen den Schneckenelementen und dem Gehäuse beträgt 0,5 mm. Die Gangsteigung beträgt 100 mm.

| Linke Welle | | Rechte Welle | |
|---|---|---|---|
| x (mm) | y (mm) | x (mm) | y (mm) |
| 49,260 | 0,000 | 44,073 | 0,000 |
| 49,495 | 0,726 | 43,806 | 1,530 |
| 49,306 | 4,383 | 43,509 | 3,042 |
| 48,928 | 5,143 | 43,182 | 4,539 |
| 48,093 | 6,759 | 42,826 | 6,019 |
| 47,240 | 8,330 | 42,441 | 7,483 |
| 46,372 | 9,857 | 42,028 | 8,933 |
| 45,487 | 11,341 | 41,586 | 10,369 |
| 44,588 | 12,786 | 41,117 | 11,790 |
| 43,676 | 14,191 | 40,619 | 13,198 |
| 42,750 | 15,560 | 40,094 | 14,593 |
| 41,811 | 16,893 | 39,541 | 15,976 |
| 40,859 | 18,192 | 38,960 | 17,346 |
| 39,895 | 19,458 | 38,351 | 18,705 |
| 38,919 | 20,694 | 37,713 | 20,052 |
| 37,931 | 21,899 | 37,046 | 21,389 |
| 36,930 | 23,076 | 36,351 | 22,714 |
| 35,916 | 24,226 | 35,625 | 24,030 |
| 34,890 | 25,349 | 34,870 | 25,335 |
| 33,851 | 26,447 | 34,085 | 26,630 |
| 32,798 | 27,521 | 33,268 | 27,915 |
| 31,732 | 28,572 | 32,419 | 29,190 |
| 30,651 | 29,600 | 31,538 | 30,456 |
| 29,556 | 30,606 | 30,624 | 31,712 |
| 28,445 | 31,592 | 29,676 | 32,958 |
| 27,415 | 32,476 | 28,692 | 34,194 |
| 26,166 | 33,490 | 27,673 | 35,420 |
| 24,981 | 34,383 | 26,617 | 36,635 |
| 23,766 | 35,234 | 25,948 | 37,376 |
| 22,522 | 36,042 | 24,111 | 38,586 |
| 20,973 | 36,965 | 22,750 | 39,404 |
| 19,956 | 37,532 | 21,361 | 40,174 |
| 18,649 | 38,236 | 19,452 | 41,132 |
| 17,327 | 38,918 | 18,420 | 41,373 |
| 15,991 | 39,578 | 16,853 | 41,712 |
| 14,638 | 40,217 | 15,294 | 42,020 |
| 13,268 | 40,836 | 13,743 | 42,297 |

(fortgesetzt)

| Linke Welle | | Rechte Welle | |
|---|---|---|---|
| x (mm) | y (mm) | x (mm) | y (mm) |
| 11,881 | 41,433 | 12,199 | 42,544 |
| 10,474 | 42,009 | 10,662 | 42,762 |
| 9,047 | 42,564 | 9,129 | 42,951 |
| 7,599 | 43,099 | 7,602 | 43,111 |
| 6,129 | 43,611 | 6,078 | 43,244 |
| 4,635 | 44,102 | 4,556 | 43,349 |
| 3,117 | 44,571 | 3,037 | 43,427 |
| 1,572 | 45,016 | 1,518 | 43,478 |
| 0,000 | 45,438 | 0,607 | 43,496 |
| -1,601 | 45,836 | -1,518 | 43,474 |
| -3,231 | 46,209 | -3,034 | 43,394 |
| -3,851 | 46,340 | -4,547 | 43,262 |
| -6,472 | 46,047 | -6,054 | 43,077 |
| -8,075 | 45,794 | -7,404 | 42,865 |
| -10,997 | 45,181 | -9,047 | 42,565 |
| -11,224 | 45,016 | -10,537 | 42,263 |
| -12,609 | 43,973 | -12,025 | 41,935 |
| -13,947 | 42,925 | -13,510 | 41,580 |
| -15,240 | 41,872 | -14,994 | 41,196 |
| -16,490 | 40,814 | -16,478 | 40,784 |
| -17,699 | 39,752 | -17,962 | 40,344 |
| -18,868 | 38,686 | -19,448 | 39,873 |
| -20,001 | 37,616 | -20,935 | 39,373 |
| -21,098 | 36,542 | -22,425 | 38,841 |
| -22,161 | 35,465 | -23,918 | 38,277 |
| -23,191 | 34,383 | -25,415 | 37,679 |
| -24,191 | 33,297 | -26,916 | 37,047 |
| -25,162 | 32,206 | -28,396 | 36,345 |
| -26,104 | 31,110 | -29,770 | 35,478 |
| -27,020 | 30,009 | -31,015 | 34,445 |
| -27,910 | 28,901 | -32,117 | 33,258 |
| -28,775 | 27,787 | -33,066 | 31,931 |
| -29,616 | 26,667 | -33,854 | 30,482 |
| -30,435 | 25,538 | -34,476 | 28,929 |
| -31,232 | 24,401 | -35,018 | 27,359 |
| -32,008 | 23,255 | -35,521 | 25,807 |
| -32,763 | 22,099 | -35,987 | 24,273 |
| -33,498 | 20,932 | -36,418 | 22,756 |
| -33,661 | 20,668 | -36,816 | 21,255 |
| -34,876 | 18,544 | -37,181 | 19,770 |
| -35,631 | 17,049 | -37,516 | 18,298 |
| -36,092 | 16,069 | -37,822 | 16,839 |
| -36,662 | 14,812 | -38,099 | 15,393 |
| -37,212 | 13,544 | -38,349 | 13,958 |
| -37,742 | 12,263 | -38,573 | 12,533 |
| -38,254 | 10,969 | -38,771 | 11,117 |
| -38,747 | 9,661 | -38,944 | 9,710 |
| -39,221 | 8,337 | -39,093 | 8,310 |
| -39,676 | 6,996 | -39,218 | 6,915 |

(fortgesetzt)

| Linke Welle | | Rechte Welle | |
|---|---|---|---|
| x (mm) | y (mm) | x (mm) | y (mm) |
| -40,112 | 5,637 | -39,320 | 5,526 |
| -40,530 | 4,260 | -39,399 | 4,141 |
| -40,928 | 2,862 | -39,455 | 2,759 |
| -41,306 | 1,442 | -39,489 | 1,379 |
| -41,664 | 0,000 | -39,500 | 0,000 |
| -42,001 | -1,467 | -39,476 | -1,379 |
| -42,317 | -2,959 | -39,404 | -2,755 |
| -42,611 | -4,479 | -39,284 | -4,129 |
| -42,882 | -6,027 | -39,128 | -5,499 |
| -43,129 | -7,605 | -38,951 | -6,868 |
| -43,350 | -9,214 | -38,750 | -8,237 |
| -43,545 | -10,857 | -38,527 | -9,606 |
| -43,686 | -12,527 | -38,281 | -10,977 |
| -43,643 | -14,181 | -38,011 | -12,350 |
| -43,403 | -15,797 | -37,716 | -13,728 |
| -42,964 | -17,359 | -37,397 | -15,109 |
| -42,329 | -18,846 | -37,052 | -16,496 |
| -41,504 | -20,243 | -36,680 | -17,890 |
| -40,503 | -21,536 | -36,282 | -19,291 |
| -39,423 | -22,761 | -35,855 | -20,701 |
| -38,333 | -23,953 | -35,398 | -22,119 |
| -37,232 | -25,113 | -34,911 | -23,548 |
| -36,120 | -26,242 | -34,392 | -24,987 |
| -34,996 | -27,342 | -33,840 | -26,438 |
| -33,862 | -28,413 | -33,252 | -27,902 |
| -32,716 | -29,457 | -32,628 | -29,379 |
| -31,557 | -30,475 | -31,966 | -30,869 |
| -30,387 | -31,466 | -31,263 | -32,374 |
| -29,203 | -32,433 | -30,518 | -33,894 |
| -28,006 | -33,376 | -29,728 | -35,429 |
| -26,795 | -34,296 | -29,415 | -36,014 |
| -25,174 | -35,476 | -27,332 | -37,619 |
| -24,325 | -36,063 | -26,002 | -38,550 |
| -23,051 | -36,890 | -24,641 | -39,434 |
| -21,750 | -37,672 | -23,468 | -40,144 |
| -20,422 | -38,408 | -21,578 | -40,582 |
| -18,219 | -39,501 | -19,959 | -40,921 |
| -17,694 | -39,741 | -18,355 | -41,226 |
| -16,305 | -40,355 | -16,766 | -41,498 |
| -14,903 | -40,946 | -15,191 | -41,737 |
| -13,488 | -41,513 | -13,629 | -41,945 |
| -12,059 | -42,056 | -12,079 | -42,124 |
| -10,615 | -42,575 | -10,540 | -42,273 |
| -9,155 | -43,071 | -9,011 | -42,394 |
| -7,678 | -43,543 | -7,492 | -42,487 |
| -6,183 | -43,992 | -5,980 | -42,553 |
| -4,668 | -44,417 | -4,477 | -42,592 |
| -3,134 | -44,817 | -2,979 | -42,605 |
| -1,578 | -45,192 | -1,487 | -42,591 |

(fortgesetzt)

| Linke Welle | | Rechte Welle | |
|---|---|---|---|
| x (mm) | y (mm) | x (mm) | y (mm) |
| -0,199 | -45,500 | 0,000 | -42,552 |
| 1,588 | -45,472 | 1,484 | -42,487 |
| 3,174 | -45,389 | 2,965 | -42,396 |
| 4,756 | -45,251 | 4,442 | -42,267 |
| 7,282 | -44,913 | 5,915 | -42,086 |
| 7,877 | -44,670 | 7,380 | -41,854 |
| 9,360 | -44,036 | 8,836 | -41,571 |
| 10,815 | -43,375 | 10,713 | -41,128 |
| 12,241 | -42,690 | 11,716 | -40,860 |
| 13,640 | -41,980 | 13,145 | -40,455 |
| 15,013 | -41,247 | 14,568 | -40,026 |
| 16,359 | -40,491 | 15,987 | -39,570 |
| 17,681 | -39,711 | 17,403 | -39,089 |
| 18,977 | -38,909 | 18,817 | -38,580 |
| 20,250 | -38,085 | 20,228 | -38,044 |
| 21,499 | -37,238 | 21,639 | -37,480 |
| 22,726 | -36,369 | 23,049 | -36,886 |
| 23,930 | -35,478 | 24,460 | -36,263 |
| 25,113 | -34,565 | 25,871 | -35,609 |
| 26,274 | -33,630 | 27,285 | -34,923 |
| 27,415 | -32,672 | 28,700 | -34,204 |
| 28,535 | -31,691 | 30,118 | -33,450 |
| 29,635 | -30,688 | 31,540 | -32,660 |
| 30,715 | -29,661 | 32,965 | -31,834 |
| 31,775 | -28,611 | 34,394 | -30,968 |
| 32,816 | -27,536 | 35,827 | -30,062 |
| 33,838 | -26,437 | 37,264 | -29,114 |
| 34,841 | -25,313 | 38,706 | -28,122 |
| 35,824 | -24,164 | 40,152 | -27,083 |
| 36,788 | -22,988 | 41,602 | -25,996 |
| 37,733 | -21,785 | 42,589 | -25,227 |
| 38,658 | -20,555 | 43,706 | -23,239 |
| 39,564 | -19,296 | 44,338 | -22,009 |
| 40,449 | -18,009 | 44,604 | -19,859 |
| 41,314 | -16,692 | 44,775 | -18,090 |
| 42,158 | -15,344 | 44,902 | -16,343 |
| 42,980 | -13,965 | 44,986 | -14,617 |
| 43,780 | -12,554 | 45,030 | -12,912 |
| 44,557 | -11,109 | 45,035 | -11,228 |
| 45,310 | -9,631 | 45,001 | -9,565 |
| 46,038 | -8,118 | 44,932 | -7,923 |
| 46,740 | -6,569 | 44,826 | -6,300 |
| 47,414 | -4,983 | 44,687 | -4,697 |
| 48,060 | -3,361 | 44,514 | -3,113 |
| 48,676 | -1,700 | 44,310 | -1,547 |
| 49,260 | 0,000 | 44,073 | 0,000 |

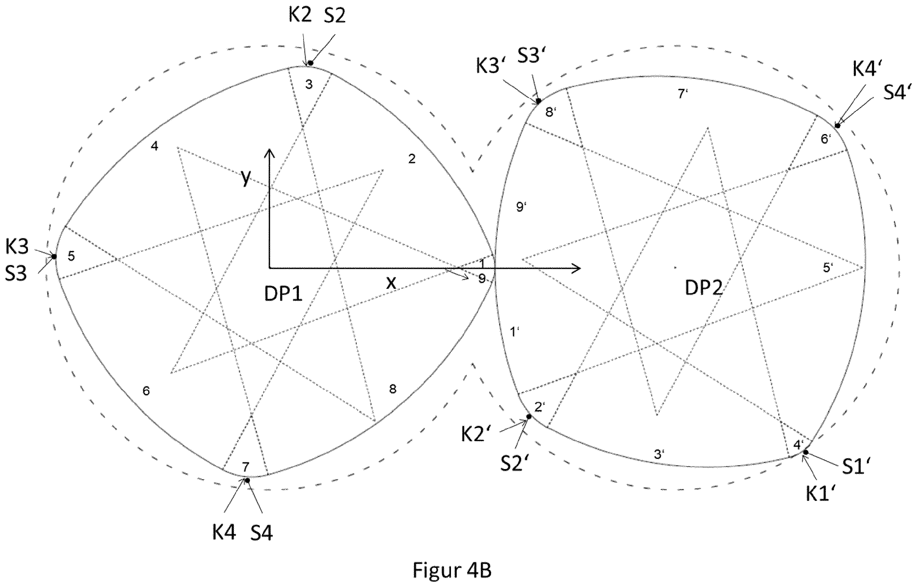

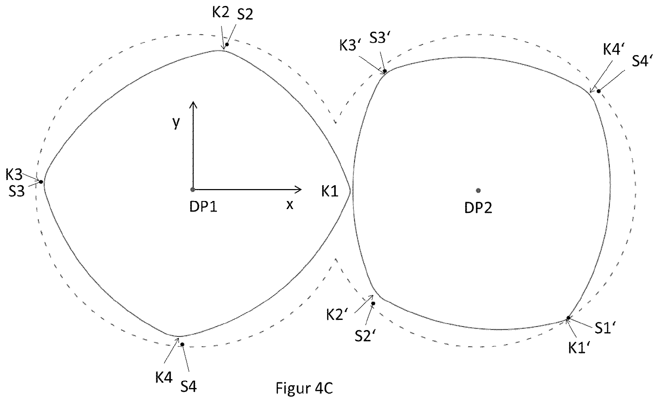

Die Figuren 4A, 4B und 4C zeigen ein weiteres erfindungsgemäßes Paar viergängiger Schneckenelemente, das sich dadurch auszeichnet, das an allen vier Kämmen keine Knicke aufweist, das Schneckenprofil an allen Kämmen also stetig differenzierbar ist, und das somit keine Kanten aufweist. Das Verhältnis a/dg von Achsabstand a zu Gehäuseinnendurchmesser dg beträgt hier 0,9023 und ist somit kleiner als 0,924.

Figur 4A zeigt das Paar viergängiger Schneckenelemente als einander praktisch abreinigendes Paar Schneckenelemente in der Aufsicht. Die Gehäusewand ist in Figur 4A durch vertikale Linien angedeutet. Die Spalte S1 bis S4 und S1'bis S4'sind in der Abbildung gekennzeichnet. Die Kämme sind nicht sichtbar, da das Schneckenelement keine Kanten aufweist.

Figur 4B zeigt die Schneckenprofile der exakt abschabenden Schneckenelemente, die den in Figur 4A und 4C dargestellten praktisch abreinigenden Schneckenelementen zugrunde liegen. Die Drehpunkte der beiden Schneckenelemente des Paares Schneckenelemente sind wiederum mit DP1 und DP2 bezeichnet. Die Kontur des Gehäuses ist durch eine gestrichelte Linie wiedergegeben. Die Kreisbögen, aus denen sich das Schneckenprofil zusammensetzt, sind beim linken Schneckenprofil mit den Ziffern 1 bis 9 bezeichnet und beim rechten Schneckenprofil mit den Ziffern 1' bis 9'. Die Spalte zwischen den Schneckenkämmen und der Gehäusewand tragen die Bezeichnungen S1 bis S4 beim linken Schneckenelement und S1' bis S4' beim rechten Schneckenelement. Der Spalt S1 ist in der Darstellung von Figur 1B nicht zu sehen, weil das linke Schneckenelement in der gezeigten Position gerade das benachbarte Schneckenelement reinigt.

Figur 4C zeigt das Schneckenquerschnittsprofil der praktisch abreinigenden Schneckenelemente aus Figur 4A. Die Schneckenquerschnittsprofile der Schneckenelemente wurden dabei mit der Raumäquidistantenrechenvorschrift ermittelt. Alternativ können solche einander praktisch abreinigenden Schneckenprofile auch mit der Längsäquidistantenrechenvorschrift berechnet werden.

Die Schneckenprofile der Schneckenelemente der Figur 4B setzten sich gemäß einer bevorzugten Ausführungsform der Erfindung nur aus Kreisbögen zusammen. In der folgenden Tabelle 4B sind für das Schneckenprofil aus Figur 4B mit den Kreisbögen 1 bis 9 und 1' bis 9' die Radien, die Winkel, die Koordinaten der Kreismittelpunkte (MP) und die Koordinaten der Startpunkte (SP) der jeweiligen Kreisbögen aufgeführt. Alle Längenmaße sind auf den Achsabstand a zwischen den Drehpunkten DP1 und DP2 normiert. Der Koordinatenursprung befindet sich im Drehpunkt des jeweiligen Schneckenprofils. Die Angaben Zentriwinkel - hier nur kurz Winkel genannt - erfolgen im Bogenmaß.

Linke Welle

| Nr. | Radius | Winkel | S-Punkt-x | S-Punkt-y | M-Punkt-x | M-Punkt-y |
|---|---|---|---|---|---|---|
| 1 | 0,091969 | 0,765575 | 0,548137 | -0,036591 | 0,463761 | 0,000000 |
| 2 | 0,846719 | 0,727147 | 0,549950 | 0,032087 | -0,243563 | -0,263328 |
| 3 | 0,153281 | 0,727147 | 0,152876 | 0,484850 | 0,081109 | 0,349408 |
| 4 | 0,908031 | 0,765574 | 0,044690 | 0,498299 | 0,260432 | -0,383730 |
| 5 | 0,153281 | 0,893822 | -0,506318 | 0,102700 | -0,376886 | 0,020588 |
| 6 | 0,846719 | 0,755050 | -0,521972 | -0,028862 | 0,279475 | 0,244299 |
| 7 | 0,153281 | 0,755050 | -0,116964 | -0,503878 | -0,045197 | -0,368436 |
| 8 | 0,846719 | 0,893822 | -0,004639 | -0,516254 | -0,228682 | 0,300286 |

Rechte Welle

| | Radius | Winkel | S-Punkt-x | S-Punkt-y | M-Punkt-x | M-Punkt-y |
|---|---|---|---|---|---|---|
| 1' | 0,908031 | 0,765575 | -0,369309 | 0,361271 | 0,463761 | 0,000000 |
| 2' | 0,153281 | 0,727147 | -0,387212 | -0,316806 | -0,243563 | -0,263328 |
| 3' | 0,846719 | 0,727147 | -0,315330 | -0,398770 | 0,081109 | 0,349408 |
| 4' | 0,091969 | 0,765574 | 0,282283 | -0,473065 | 0,260432 | -0,383730 |
| 5' | 0,846719 | 0,893822 | 0,338091 | -0,432998 | -0,376886 | 0,020588 |
| 6' | 0,153281 | 0,755050 | 0,424560 | 0,293749 | 0,279475 | 0,244299 |
| 7' | 0,846719 | 0,755050 | 0,351242 | 0,379741 | -0,045197 | -0,368436 |
| 8' | 0,153281 | 0,893822 | -0,269240 | 0,448104 | -0,228682 | 0,300286 |

Die in Figur 4C dargestellte Schneckenquerschnittskontur mit raumäquidistantem Spalt wird in der folgenden Tabelle 4C in kartesischen Koordinaten für die linke und für die rechte Welle angegeben. Der Koordinatenursprung liegt für jede der beiden Wellen im Drehpunkt DP1 bzw. DP2 des jeweiligen Schneckenelementes. Das Paar viergängiger Schneckenelemente hat einen Außendurchmesser von 52,9 mm und ist für den Einbau in ein Gehäuse mit einem Achsabstand von 48 mm und einem Gehäuseinnendurchmesser dg von 53,2 mm vorgesehen. Das Spiel bei der gegenseitigen Abreinigung der Schneckenelemente beträgt 0,45 mm. Die Gangsteigung beträgt 40 mm.

| Linke Welle | | Rechte Welle | |
|---|---|---|---|
| x (mm) | y (mm) | x (mm) | y (mm) |
| 26,450 | 0,000 | 22,314 | 0,000 |
| 26,245 | 0,917 | 22,324 | 0,780 |
| 25,923 | 1,813 | 22,319 | 1,561 |
| 25,585 | 2,689 | 22,298 | 2,344 |
| 25,231 | 3,546 | 22,260 | 3,129 |
| 24,863 | 4,384 | 22,207 | 3,916 |
| 24,480 | 5,203 | 22,138 | 4,706 |
| 24,083 | 6,005 | 22,052 | 5,498 |
| 23,673 | 6,788 | 21,949 | 6,294 |
| 23,250 | 7,554 | 21,829 | 7,093 |
| 22,815 | 8,304 | 21,692 | 7,895 |
| 22,367 | 9,037 | 21,536 | 8,701 |
| 21,908 | 9,754 | 21,363 | 9,511 |
| 21,437 | 10,456 | 21,170 | 10,325 |
| 20,955 | 11,142 | 20,958 | 11,144 |
| 20,462 | 11,814 | 20,726 | 11,966 |
| 19,957 | 12,471 | 20,473 | 12,793 |
| 19,442 | 13,114 | 20,200 | 13,625 |
| 18,915 | 13,743 | 19,903 | 14,461 |
| 18,378 | 14,358 | 19,553 | 15,277 |
| 17,830 | 14,961 | 19,098 | 16,025 |
| 17,270 | 15,550 | 18,534 | 16,688 |
| 16,699 | 16,126 | 17,867 | 17,254 |
| 16,118 | 16,690 | 17,118 | 17,726 |
| 15,524 | 17,242 | 16,341 | 18,148 |
| 14,920 | 17,781 | 15,564 | 18,548 |
| 14,303 | 18,307 | 14,788 | 18,927 |
| 13,675 | 18,822 | 14,012 | 19,286 |
| 13,035 | 19,325 | 13,236 | 19,624 |
| 12,382 | 19,815 | 12,461 | 19,942 |
| 11,717 | 20,294 | 11,686 | 20,241 |
| 11,039 | 20,761 | 10,912 | 20,522 |
| 10,347 | 21,215 | 10,137 | 20,784 |
| 9,643 | 21,658 | 9,363 | 21,029 |
| 8,924 | 22,088 | 8,588 | 21,257 |
| 8,191 | 22,505 | 7,813 | 21,467 |
| 7,444 | 22,910 | 7,038 | 21,660 |
| 6,682 | 23,302 | 6,262 | 21,837 |
| 5,888 | 23,616 | 5,485 | 21,997 |
| 5,060 | 23,803 | 4,706 | 22,141 |
| 4,208 | 23,862 | 3,927 | 22,269 |
| 3,345 | 23,802 | 3,146 | 22,382 |
| 2,484 | 23,636 | 2,362 | 22,478 |
| 1,639 | 23,437 | 1,577 | 22,558 |
| 0,811 | 23,225 | 0,790 | 22,622 |

(fortgesetzt)

| Linke Welle | | Rechte Welle | |
|---|---|---|---|
| x (mm) | y (mm) | x (mm) | y (mm) |
| 0,000 | 22,999 | 0,000 | 22,670 |
| -0,795 | 22,762 | -0,793 | 22,703 |
| -1,574 | 22,512 | -1,589 | 22,719 |
| -2,339 | 22,251 | -2,388 | 22,719 |
| -3,089 | 21,978 | -3,191 | 22,702 |
| -3,825 | 21,695 | -3,997 | 22,669 |
| -4,549 | 21,402 | -4,808 | 22,619 |
| -5,260 | 21,097 | -5,623 | 22,551 |
| -5,959 | 20,783 | -6,442 | 22,466 |
| -6,647 | 20,458 | -7,266 | 22,363 |
| -7,324 | 20,123 | -8,095 | 22,242 |
| -7,991 | 19,778 | -8,930 | 22,101 |
| -8,648 | 19,423 | -9,769 | 21,942 |
| -9,295 | 19,058 | -10,614 | 21,762 |
| -9,934 | 18,682 | -11,464 | 21,561 |
| -10,564 | 18,297 | -12,320 | 21,339 |
| -11,185 | 17,900 | -13,182 | 21,095 |
| -11,799 | 17,493 | -14,034 | 20,806 |
| -12,405 | 17,075 | -14,827 | 20,408 |
| -13,005 | 16,645 | -15,541 | 19,891 |
| -13,597 | 16,204 | -16,162 | 19,262 |
| -14,183 | 15,752 | -16,692 | 18,538 |
| -14,762 | 15,287 | -17,127 | 17,736 |
| -15,336 | 14,810 | -17,504 | 16,904 |
| -15,903 | 14,320 | -17,858 | 16,079 |
| -16,466 | 13,816 | -18,188 | 15,262 |
| -17,022 | 13,299 | -18,497 | 14,451 |
| -17,574 | 12,768 | -18,784 | 13,647 |
| -18,120 | 12,222 | -19,052 | 12,850 |
| -18,661 | 11,661 | -19,300 | 12,060 |
| -19,197 | 11,083 | -19,529 | 11,275 |
| -19,728 | 10,489 | -19,741 | 10,497 |
| -20,254 | 9,878 | -19,936 | 9,723 |
| -20,774 | 9,249 | -20,114 | 8,955 |
| -21,290 | 8,602 | -20,276 | 8,192 |
| -21,799 | 7,934 | -20,422 | 7,433 |
| -22,303 | 7,247 | -20,553 | 6,678 |
| -22,801 | 6,538 | -20,670 | 5,927 |
| -23,293 | 5,808 | -20,772 | 5,179 |
| -23,777 | 5,054 | -20,859 | 4,434 |
| -24,254 | 4,277 | -20,933 | 3,691 |
| -24,683 | 3,469 | -20,994 | 2,950 |
| -24,994 | 2,627 | -21,040 | 2,211 |
| -25,177 | 1,761 | -21,073 | 1,474 |
| -25,216 | 0,881 | -21,093 | 0,737 |
| -25,111 | 0,000 | -21,100 | 0,000 |
| -24,880 | -0,869 | -21,093 | -0,737 |
| -24,599 | -1,720 | -21,073 | -1,474 |
| -24,303 | -2,554 | -21,040 | -2,211 |

(fortgesetzt)

| Linke Welle | | Rechte Welle | |
|---|---|---|---|
| x (mm) | y (mm) | x (mm) | y (mm) |
| -23,993 | -3,372 | -20,994 | -2,950 |
| -23,668 | -4,173 | -20,933 | -3,691 |
| -23,330 | -4,959 | -20,859 | -4,434 |
| -22,979 | -5,729 | -20,772 | -5,179 |
| -22,615 | -6,485 | -20,670 | -5,927 |
| -22,238 | -7,226 | -20,553 | -6,678 |
| -21,850 | -7,953 | -20,422 | -7,433 |
| -21,449 | -8,666 | -20,276 | -8,192 |
| -21,036 | -9,366 | -20,114 | -8,955 |
| -20,612 | -10,053 | -19,936 | -9,723 |
| -20,176 | -10,728 | -19,741 | -10,497 |
| -19,728 | -11,390 | -19,529 | -11,275 |
| -19,268 | -12,040 | -19,300 | -12,060 |
| -18,797 | -12,679 | -19,052 | -12,850 |
| -18,315 | -13,306 | -18,784 | -13,647 |
| -17,820 | -13,923 | -18,497 | -14,451 |
| -17,314 | -14,528 | -18,188 | -15,262 |
| -16,796 | -15,123 | -17,848 | -16,070 |
| -16,265 | -15,707 | -17,421 | -16,823 |
| -15,723 | -16,281 | -16,901 | -17,502 |
| -15,167 | -16,845 | -16,288 | -18,090 |
| -14,599 | -17,399 | -15,589 | -18,578 |
| -14,018 | -17,943 | -14,838 | -18,992 |
| -13,424 | -18,477 | -14,084 | -19,385 |
| -12,816 | -19,001 | -13,327 | -19,758 |
| -12,194 | -19,515 | -12,568 | -20,113 |
| -11,558 | -20,019 | -11,806 | -20,449 |
| -10,907 | -20,513 | -11,042 | -20,767 |
| -10,241 | -20,997 | -10,275 | -21,067 |
| -9,559 | -21,471 | -9,506 | -21,351 |
| -8,862 | -21,934 | -8,734 | -21,616 |
| -8,148 | -22,387 | -7,958 | -21,865 |
| -7,418 | -22,829 | -7,180 | -22,098 |
| -6,670 | -23,260 | -6,398 | -22,313 |
| -5,904 | -23,678 | -5,613 | -22,512 |
| -5,119 | -24,085 | -4,824 | -22,695 |
| -4,311 | -24,449 | -4,031 | -22,861 |
| -3,470 | -24,693 | -3,234 | -23,011 |
| -2,607 | -24,799 | -2,433 | -23,144 |
| -1,732 | -24,766 | -1,627 | -23,261 |
| -0,859 | -24,607 | -0,816 | -23,361 |
| 0,000 | -24,384 | 0,000 | -23,445 |
| 0,843 | -24,145 | 0,821 | -23,512 |
| 1,671 | -23,891 | 1,648 | -23,561 |
| 2,483 | -23,622 | 2,480 | -23,594 |
| 3,280 | -23,339 | 3,318 | -23,609 |
| 4,063 | -23,042 | 4,162 | -23,606 |
| 4,832 | -22,732 | 5,013 | -23,585 |
| 5,587 | -22,409 | 5,870 | -23,545 |

(fortgesetzt)

| Linke Welle | | Rechte Welle | |
|---|---|---|---|
| x (mm) | y (mm) | x (mm) | y (mm) |
| 6,329 | -22,073 | 6,734 | -23,486 |
| 7,059 | -21,725 | 7,605 | -23,407 |
| 7,776 | -21,364 | 8,483 | -23,308 |
| 8,481 | -20,991 | 9,369 | -23,188 |
| 9,174 | -20,606 | 10,261 | -23,047 |
| 9,857 | -20,209 | 11,161 | -22,883 |
| 10,528 | -19,800 | 12,068 | -22,697 |
| 11,188 | -19,379 | 12,982 | -22,486 |
| 11,839 | -18,946 | 13,904 | -22,251 |
| 12,479 | -18,500 | 14,789 | -21,926 |
| 13,109 | -18,043 | 15,449 | -21,264 |
| 13,730 | -17,573 | 15,984 | -20,459 |
| 14,341 | -17,091 | 16,491 | -19,653 |
| 14,943 | -16,596 | 16,971 | -18,848 |
| 15,536 | -16,088 | 17,425 | -18,044 |
| 16,120 | -15,567 | 17,854 | -17,242 |
| 16,695 | -15,033 | 18,260 | -16,441 |
| 17,262 | -14,485 | 18,642 | -15,643 |
| 17,820 | -13,923 | 19,003 | -14,846 |
| 18,370 | -13,346 | 19,341 | -14,052 |
| 18,911 | -12,755 | 19,659 | -13,260 |
| 19,443 | -12,149 | 19,956 | -12,470 |
| 19,966 | -11,528 | 20,234 | -11,682 |
| 20,481 | -10,890 | 20,492 | -10,896 |
| 20,987 | -10,236 | 20,732 | -10,112 |
| 21,484 | -9,565 | 20,954 | -9,329 |
| 21,972 | -8,877 | 21,158 | -8,548 |
| 22,450 | -8,171 | 21,344 | -7,769 |
| 22,918 | -7,446 | 21,514 | -6,990 |
| 23,375 | -6,703 | 21,667 | -6,213 |
| 23,822 | -5,940 | 21,804 | -5,436 |
| 24,258 | -5,156 | 21,924 | -4,660 |
| 24,681 | -4,352 | 22,028 | -3,884 |
| 25,092 | -3,527 | 22,117 | -3,108 |
| 25,490 | -2,679 | 22,190 | -2,332 |
| 25,874 | -1,809 | 22,247 | -1,556 |
| 26,242 | -0,916 | 22,288 | -0,778 |
| 26,450 | 0,000 | 22,314 | 0,000 |

**Patentansprüche**

1. Paar viergängiger Schneckenelemente,

   geeignet für eine mehrwellige Schneckenmaschine
   mit m gleichsinnig und gleichschnell drehenden Schneckenwellen SW1 bis SWm, deren jeweils benachbarte Drehachsen D1 bis Dm in einem Querschnitt rechtwinklig zu den Drehachsen einen Achsabstand a besitzen und mit m einander durchdringenden, kreisförmigen Gehäusebohrungen, die jeweils einen identischen Gehäuseinnenradius rg aufweisen und deren Bohrungsmittelpunkte M1 bis Mm einen Abstand besitzen, der gleich dem Achsabstand a ist, und deren Bohrungsmittelpunkte M1 bis Mm mit den jeweilig zugehörigen Drehachsen D1 bis Dm der Schneckenwellen SW1 bis SWm zusammenfallen, wobei jedes der beiden Schneckenelemente des Paares Schneckenelemente ein Schneckenprofil aufweist, für das gilt, dass:

(1) es eine geschlossene konvexe Kurve ist,

wobei diese geschlossene konvexe Kurve nur aus Kurventeilstücken zusammengesetzt ist, deren Krümmungsradien kleiner oder gleich dem Achsabstand a sind,

(2) es sich aus mindestens 16 Kurvenzügen zusammensetzt,

(3) es genau eine oder keine Achsensymmetrie aufweist,

(4) es genau vier Nuten aufweist,

(5) es genau vier Kämme - umlaufend mit K1, K2, K3 und K4 benannt - aufweist,

(6) der zu einem Kamm Ki jeweilig zugehörige Kammradius r(Ki) der größte Abstand eines Kamms Ki vom Drehpunkt DPm ist, wobei gilt:

$$r(K1) > r(K2) \text{ und } r(K1) > r(K3) \text{ und } r(K1) > r(K4),$$

und

$$r(K3) > r(K2) \text{ und } r(K3) > r(K4),$$

wobei r(K1) der Kammradius des Schneckenkamms K1 ist und r(K2) der Kammradius des Schneckenkamms K2 ist und r(K3) der Kammradius des Schneckenkamms K3 ist, und r(K4) der Kammradius des Schneckenkamms K4 ist,

wobei r(K1) gleich dem Außenradius ra ist,

und der Außenradius ra der Radius des Kreises ist, der das gesamte Schneckenprofil einschließt und dessen Mittelpunkt der zum diesem Schneckenprofil zugehörige Drehpunkt ist, wobei der Kamm K1 ein Kreissegment dieses Kreises ist,

und m eine ganze Zahl größer 1 ist, bevorzugt von 2 bis 16, besonders bevorzugt, 2, 3, 4, 6, 8, 10, 12 und 16,

und i die Werte 1, 2, 3 oder 4 annehmen kann,

(7) zwei Schneckenelemente, die unmittelbar benachbart auf zwei der gleichsinnig und gleichschnell drehenden Schneckenwellen der mehrwelligen Schneckenmaschine paarweise gegenüberliegen, sich paarweise praktisch abreinigen,

(8) eine Nut vom nächstliegenden Punkt eines benachbarten Kamms durch eine Flanke getrennt ist,

(9) es genau acht Kurvenzüge aufweist, die Flanken sind.

2. Paar viergängiger Schneckenelemente nach Anspruch 1, wobei jeder der vier Kämme aus nur jeweils einem Kurventeilstück gebildet ist, das ein Kreisbogen ist, dessen Mittelpunkt der den vier Kämmen gemeinsame Drehpunkt ist, und die einem Kamm jeweils unmittelbar benachbarten zwei Kurventeilstücke bis auf den jeweils gemeinsamen Berührpunkt einen kleineren Abstand von dem Drehpunkt besitzen als der Kreisbogen dieses Kamms,
und
wobei jede der vier Nuten aus nur jeweils einem Kurventeilstück gebildet ist, das ein Kreisbogen ist, dessen Mittelpunkt der den vier Nuten gemeinsame Drehpunkt ist, und die einer Nut jeweils unmittelbar benachbarten zwei Kurventeilstücke bis auf den jeweils gemeinsamen Berührpunkt einen größeren Abstand von dem Drehpunkt besitzen als der Kreisbogen dieser Nut, und wobei es genau eine Nut gibt, deren Abstand vom Drehpunkt kleiner ist als die Abstände der anderen Nuten vom Drehpunkt.

3. Paar viergängiger Schneckenelemente nach Anspruch 2, wobei der Schneckenkamm mit dem größten Abstand r(Ki) des Schneckenkamms vom Drehpunkt den kleinsten Kammwinkel aufweist.

4. Paar viergängiger Schneckenelemente nach einem der vorhergehenden Ansprüche, wobei der Kammwinkel des Kamms K1 ungleich ist dem Kammwinkel des Kamms K3 und der Kammwinkel des Kamms K2 ungleich ist dem Kammwinkel des Kamms K4.

5. Paar viergängiger Schneckenelemente nach einem der vorhergehenden Ansprüche, wobei alle Kammwinkel der Kämme K1, K2, K3 und K4 voneinander verschieden sind.

6.  Paar viergängiger Schneckenelemente nach einem der vorhergehenden Ansprüche, wobei bei einem gegebenen Gehäuseinnenradius rg in Relation zu einem gegebenen Achsabstand a der Abstand r(K1) des Kamms K1 vom Drehpunkt so gewählt ist, dass für r(K1) der Bereich gilt: r(K1) ist kleiner oder gleich rg - 0,001 * a und r(K1) ist größer oder gleich rg - 0,015 * a.

7.  Paar viergängiger Schneckenelemente nach einem der vorhergehenden Ansprüche, wobei bei einem gegebenen Gehäuseinnenradius rg in Relation zu einem gegebenen Achsabstand a für den Abstand r(K3) des Kamms K3 vom Drehpunkt gilt: r(K3) ist kleiner oder gleich r(K1) - 0,0015 * a und r(K3) ist kleiner oder größer r(K1) - 0,03 * a.

8.  Paar viergängiger Schneckenelemente nach Anspruch 7 oder 8, wobei bei einem gegebenen Gehäuseinnenradius rg in Relation zu einem gegebenen Achsabstand a für den Abstand r(K2) des Kamms K2 vom Drehpunkt gilt: r(K2) ist kleiner oder gleich r(K1) - 0,003 * a und r(K2) ist größer oder gleich r(K1) - 0,08 * a,
    und bevorzugt gilt: r(K2) ist kleiner oder gleich r(K1) - 0,005 * a und r(K2) ist größer oder gleich r(K1) - 0,04 * a.

9.  Paar viergängiger Schneckenelemente nach einem der Ansprüche 6 bis 8, wobei bei einem gegebenen Gehäuseinnenradius rg in Relation zu einem gegebenen Achsabstand a der Abstand r(K4) des Kamms K4 vom Drehpunkt so gewählt, dass für r(K4) der Bereich gilt: r(K4) ist kleiner oder gleich r(K1) - 0,003 * a und r(K4) ist größer oder gleich r(K1) - 0,08 * a,
    und bevorzugt gilt: r(K4) ist kleiner oder gleich r(K1) - 0,005 * a und r(K4) ist größer oder gleich r(K1) - 0,04 * a.

10. Paar viergängiger Schneckenelemente nach einem der Ansprüche 2 bis 9, wobei der Kammwinkel KW1 von größer 0 Grad bis kleiner 8 Grad, bevorzugt von größer 2 Grad bis kleiner 6 Grad beträgt.

11. Paar viergängiger Schneckenelemente nach einem der vorhergehenden Ansprüche, wobei der Kammwinkel KW1 0 Grad ist.

12. Paar viergängiger Schneckenelemente nach einem der vorhergehenden Ansprüche, wobei in einem Querschnitt rechtwinklig zu den Schneckenwellen SW1 bis SWm alle Schneckenelemente einander praktisch abreinigen.

13. Mehrwellige Schneckenmaschine, ausgerüstet mit einem Paar der Schneckenelemente nach einem der vorhergehenden Ansprüche.

14. Verfahren zur Extrusion plastischer oder viskoelastischer Massen unter Verwendung eines Paares von Schneckenelementen nach einem der Ansprüche 1 bis 12 oder unter Verwendung einer Schneckenmaschine nach Anspruch 13.

15. Verfahren zur Compoundierung von Thermoplasten mit Farb- und Zuschlagstoffen unter Verwendung eines Paares von Schneckenelementen nach einem der Ansprüche 1 bis 12 oder unter Verwendung einer Schneckenmaschine nach Anspruch 13.

**Claims**

1.  Pair of four-flight screw elements,

    suitable for a multishaft screw machine
    with m screw shafts SW1 to SWm rotating in the same direction and at the same speed, the respective neighbouring axes of rotation D1 to Dm of which have a centre distance a in a cross-section at right angles to the axes of rotation and
    with m circular housing bores which penetrate one another, each of which has an identical housing inner radius rg and the bore centres M1 to Mm of which are at a distance which is the same as the centre distance a, and the bore centres M1 to Mm of which coincide with the respective associated axes of rotation D1 to Dm of the screw shafts SW1 to SWm,
    wherein each of the two screw elements of the pair of screw elements has a screw profile for which the following applies:

        (1) it is a closed convex curve,
        wherein this closed convex curve is composed merely of curve sections of which the radii of curvature are less than or equal to the centre distance a,

(2) it is composed of at least 16 curves,
(3) it has exactly one or no axis symmetry,
(4) it has exactly four grooves,
(5) it has exactly four crests - labelled as they revolve as K1, K2, K3 and K4,
(6) the crest radius r(Ki) respectively associated with a crest Ki is the greatest distance of a crest Ki from the pivot point DPm, wherein the following is true:

$$r(K1) > r(K2) \text{ and } r(K1) > r(K3) \text{ and } r(K1) > r(K4),$$

and

$$r(K3) > r(K2) \text{ and } r(K3) > r(K4),$$

wherein r(K1) is the crest radius of the screw crest K1 and r(K2) is the crest radius of the screw crest K2 and r(K3) is the crest radius of the screw crest K3, and r(K4) is the crest radius of the screw crest K4, wherein r(K1) is equal to the outer radius ra,
and the outer radius ra is the radius of the circle which encloses the entire screw profile and of which the centre point is the pivot point associated with this screw profile, wherein the crest K1 is a segment of this circle, and m is an integer greater than 1, preferably from 2 to 16, particularly preferably 2, 3, 4, 6, 8, 10, 12 and 16, and i may assume the values 1, 2, 3 or 4,

(7) two screw elements located oppositely in pairs and directly adjacently to one another on two of the screw shafts of the multishaft screw machine, which rotate in the same direction and at the same speed, practically clean one another in pairs,
(8) a groove is separated from the nearest point of a neighbouring crest by a flank,
(9) it has exactly eight curves, which are flanks.

2. Pair of four-flight screw elements according to Claim 1, wherein each of the four crests is formed from only one curve section each, which is a circular arc of which the centre point is the pivot point common to the four crests, and the two curve sections immediately neighbouring a crest have a smaller distance from the pivot point than the circular arc of this crest, except for the common point of contact,
and
wherein each of the four grooves is formed from only one curve section, which is a circular arc of which the centre point is the pivot point common to the four grooves, and the two curve sections directly neighbouring a groove are at a greater distance from the pivot point than the circular arc of this groove, except for the common point of contact, and wherein there is exactly one groove of which the distance from the pivot point is smaller than the distances of the other grooves from the pivot point.

3. Pair of four-flight screw elements according to Claim 2, wherein the screw crest with the greatest distance r(Ki) of the screw crest from the pivot point has the smallest crest angle.

4. Pair of four-flight screw elements according to one of the preceding claims, wherein the crest angle of the crest K1 is not equal to the crest angle of the crest K3 and the crest angle of the crest K2 is not equal to the crest angle of the crest K4.

5. Pair of four-flight screw elements according to one of the preceding claims, wherein all crest angles of the crests K1, K2, K3 and K4 are different from one another.

6. Pair of four-flight screw elements according to one of the preceding claims, wherein, for a given housing inner radius rg in relation to a given centre distance a, the distance r(K1) of the crest K1 from the pivot point is selected such that the following range applies for r(K1): r(K1) is less than or equal to rg - 0.001 * a and r(K1) is greater than or equal to rg - 0.015 * a.

7. Pair of four-flight screw elements according to one of the preceding claims, wherein, for a given housing inner radius rg in relation to a given centre distance a, the following applies for the distance r(K3) of the crest K3 from the pivot point: r(K3) is less than or equal to r(K1) - 0.0015 * a and r(K3) is less than or greater than r(K1) - 0.03 * a.

8. Pair of four-flight screw elements according to Claim 7 or 8, wherein, for a given housing inner radius rg in relation to a given centre distance a, the following applies for the distance r(K2) of the crest K2 from the pivot point: r(K2) is less than or equal to r(K1) - 0.003 * a and r(K2) is greater than or equal to r(K1) - 0.08 * a, and preferably the following applies: r(K2) is less than or equal to r(K1) - 0.005 * a and r(K2) is greater than or equal to r(K1) - 0.04 * a.

9. Pair of four-flight screw elements according to one of Claims 6 to 8, wherein, for a given housing inner radius rg in relation to a given centre distance a, the distance r(K4) of the crest K4 from the pivot point is selected such that the following range applies for r(K4): r(K4) is less than or equal to r(K1) - 0.003 * a and r(K4) is greater than or equal to r(K1) - 0.08 * a, and preferably the following applies: r(K4) is less than or equal to r(K1) - 0.005 * a and r(K4) is greater than or equal to r(K1) - 0.04 * a.

10. Pair of four-flight screw elements according to one of Claims 2 to 9, wherein the crest angle KW1 is from greater than 0 degrees to less than 8 degrees, preferably from greater than 2 degrees to less than 6 degrees.

11. Pair of four-flight screw elements according to one of the preceding claims, wherein the crest angle KW1 is 0 degrees.

12. Pair of four-flight screw elements according to one of the preceding claims, wherein all screw elements practically clean each other in a cross-section at right angles to the screw shafts SW1 to SWm.

13. Multishaft screw machine, equipped with a pair of screw elements according to one of the preceding claims.

14. Method for extruding plastic or viscoelastic masses using a pair of screw elements according to one of Claims 1 to 12 or using a screw machine according to Claim 13.

15. Method for compounding thermoplastics with colorants and additives using a pair of screw elements according to one of Claims 1 to 12 or using a screw machine according to Claim 13.


**Revendications**

1. Paire d'éléments de vis sans fin à quatre pas,

    adaptée pour une machine à vis sans fin à arbres multiples avec m arbres de vis sans fin SW1 à SWm tournant dans le même sens et à la même vitesse, dont les axes de rotation D1 à Dm respectivement adjacents possèdent, dans une section transversale, une distance axiale a à angle droit par rapport aux axes de rotation et avec m alésages de boîtier circulaires, traversants, qui présentent chacun un rayon intérieur rg de boîtier identique et dont les milieux d'alésage M1 à Mm possèdent une distance, qui est égale à la distance axiale a et dont les milieux d'alésage M1 à Mm coïncident avec les axes de rotation D1 à Dm respectivement associés des arbres de vis sans fin SW1 à SWm,
    chacun des deux éléments de vis sans fin de la paire d'éléments de vis sans fin comportant un profil de vis sans fin, pour lequel s'applique le fait que :

    (1) il est une courbe convexe fermée,
    ladite courbe convexe fermée étant composée seulement de tronçons de courbe, dont les rayons de courbure sont inférieurs ou égaux à la distance axiale a,
    (2) il se compose d'au moins 16 tracés de courbe,
    (3) il présente précisément une ou aucune symétrie axiale,
    (4) il comporte précisément 4 rainures,
    (5) il comporte précisément 4 peignes - en périphérie désignés par K1, K2, K3 et K4,
    (6) le rayon de peigne r(Ki) respectivement associé est la distance la plus grande d'un peigne Ki par rapport au point de rotation DPm, s'appliquant :

$$r(K1) > r(K2) \text{ et } r(K1) > r(K3) \text{ et } r(K1) > r(K4),$$

    et

$$r(K3) > r(K2) \text{ et } r(K3) > r(K4),$$

r(K1) étant le rayon de peigne du peigne K1 de vis sans fin et r(K2) étant le rayon de peigne du peigne K2 de vis sans fin et r(K3) étant le rayon de peigne du peigne K3 de vis sans fin et r(K4) étant le rayon de peigne du peigne K4 de vis sans fin,

r(K1) étant égal au rayon extérieur ra,

et le rayon extérieur ra étant le rayon du cercle, qui forme la totalité du profil de vis sans fin et dont le milieu est le point de rotation associé audit profil de vis sans fin, le peigne K1 étant un segment de cercle dudit cercle,

et m étant un nombre entier supérieur à 1, de manière préférée de 2 à 16, de manière particulièrement préférée de 2, 3, 4, 6, 8, 10, 12 et 16,

et i pouvant prendre les valeurs 1, 2, 3 ou 4,

(7) deux éléments de vis sans fin, qui se font face par paire de manière directement adjacente sur deux arbres de vis sans fin tournant dans le même sens et à la même vitesse de la machine à vis sans fin à arbres multiples, se nettoient pratiquement par paires,

(8) une rainure est séparée par un flanc du point le plus proche d'un peigne adjacent,

(9) il présente précisément 8 tracés de courbe, qui sont des flancs.

2. Paire d'éléments de vis sans fin à 4 pas selon la revendication 1, chacun des 4 peignes étant formé à partir de seulement respectivement un tronçon de courbe, qui est un arc de cercle, dont le milieu est le point de rotation commun aux 4 peignes, et les deux tronçons de courbe respectivement directement adjacents à un peigne possédant à l'exception du point de contact respectivement commun une distance inférieure par rapport au point de rotation que l'arc de cercle dudit peigne,

et

chacune des 4 rainures étant formée à partir de seulement respectivement un tronçon de courbe qui est un arc de cercle dont le milieu est le point de rotation commun aux 4 rainures et les deux tronçons de courbe respectivement directement adjacents à une rainure possédant à l'exception du point de contact respectivement commun une distance supérieure par rapport au point de rotation que l'arc de cercle de ladite rainure, précisément une rainure étant présente, dont la distance par rapport au point de rotation est inférieure aux distances des autres rainures par rapport au point de rotation.

3. Paire d'éléments de vis sans fin à 4 pas selon la revendication 2, le peigne de vis sans fin avec la distance r(Ki) la plus grande du peigne de vis sans fin par rapport au point de rotation présentant l'angle de peigne le plus petit.

4. Paire d'éléments de vis sans fin à 4 pas selon l'une quelconque des revendications précédentes, l'angle de peigne du peigne K1 n'étant pas égal à l'angle de peigne du peigne K3 et l'angle de peigne du peigne K2 n'étant pas égal à l'angle de peigne du peigne K4.

5. Paire d'éléments de vis sans fin à 4 pas selon l'une des revendications précédentes, la totalité des angles de peigne des peignes K1, K2, K3 et K4 étant différents les uns des autres.

6. Paire d'éléments de vis sans fin à 4 pas selon l'une des revendications précédentes, dans le cas d'un rayon intérieur rg de boîtier donné en lien avec une distance axiale a donnée, la distance r(K1) du peigne K1 par rapport au point de rotation est choisie de telle sorte que pour r(K1), s'applique la plage : r(K1) est inférieur ou égal à rg - 0,001 * a et r(K1) est supérieur ou égal à rg - 0,015 * a.

7. Paire d'éléments de vis sans fin à 4 pas selon l'une des revendications précédentes, s'appliquant dans le cas d'un rayon intérieur rg de boîtier donné en lien avec une distance axiale a donnée, pour la distance r(K3) du peigne K3 par rapport au point de rotation : r(K3) est inférieur ou égal à r(K1) - 0,0015 * a et r(K3) est inférieur ou égal à r(K1) - 0,03 * a.

8. Paire d'éléments de vis sans fin à 4 pas selon la revendication 7 ou 8, s'appliquant dans le cas d'un rayon intérieur rg de boîtier donné en lien avec une distance axiale a donnée pour la distance r(K2) du peigne K2 par rapport au point de rotation : r(K2) est inférieur ou égal à r(K1) - 0,003 * a et r(K2) est supérieur ou égal à r(K1) - 0,08 * a,

et s'appliquant de manière préférée : r(K2) est inférieur ou égal à r(K1) - 0,005 * a et r(K2) est supérieur ou égal à r(K1) - 0,04 * a.

9. Paire d'éléments de vis sans fin à 4 pas selon l'une des revendications 6 à 8, dans le cas d'un rayon intérieur rg de boîtier donné en lien avec une distance axiale a donnée, la distance r(K4) du peigne K4 par rapport au point de rotation est choisie de telle sorte que pour r(K4), s'applique la plage : r(K4) est inférieur ou égal à r(K1) - 0,003 * a et r(K4) est supérieur ou égal à r(K1) - 0,08 * a.

   et s'appliquant de manière préférée : r(K4) est inférieur ou égal à r(K1) - 0,005 * a et r(K4) est supérieur ou égal à r(K1) - 0,04 * a.

10. Paire d'éléments de vis sans fin à 4 pas selon l'une des revendications 2 à 9, l'angle de peigne KW1 étant supérieur à 0° et inférieur à 8 degrés, de manière préférée étant supérieur à 2 degrés et inférieur à 6 degrés.

11. Paire d'éléments de vis sans fin à 4 pas selon l'une des revendications précédentes, l'angle de peigne KW1 étant de 0 degré.

12. Paire d'éléments de vis sans fin à 4 pas selon l'une des revendications précédentes, tous les éléments de vis sans fin se nettoyant pratiquement les uns les autres dans une section transversale à angle droit par rapport aux arbres de vis sans fin SW1 à SWm.

13. Machine à vis sans fin à arbres multiples, équipée d'une paire des éléments de vis sans fin selon l'une des revendications précédentes.

14. Procédé d'extrusion de masses plastiques ou viscoélastiques en utilisant une paire d'éléments de vis sans fin selon l'une des revendications 1 à 12 ou en utilisant une machine à vis sans fin selon la revendication 13.

15. Procédé de combinaison de matières thermoplastiques à des colorants et des agrégats en utilisant une paire d'éléments de vis sans fin selon l'une des revendications 1 à 12 ou en utilisant une machine à vis sans fin selon la revendication 13.

Figur 1A

Figur 1 B

EP 4 489 956 B1

Figur 1 C

Figur 2A

Figur 2B

EP 4 489 956 B1

Figur 2 C

Figur 3A

Figur 3B

EP 4 489 956 B1

Figur 3C

Figur 4A

Figur 4B

Figur 4C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 862668 C
- WO 2017084646 A1
- EP 3281767 A1
- WO 2021065192 A1
- DE 4134026 A1
- DE 19706134 A1
- WO 2004009326 A1

- DE 940109 C
- DE 3412258 A1
- EP 2131 A1
- DE 4239220 A1
- WO 0209919 A2
- EP 1093905 A2
- US 6783270 B1

**In der Beschreibung aufgeführte Nicht-Patentliteratur**

- **KLEMENS KOHLGRÜBER**. Der gleichläufige Doppelschneckenextruder. Hanser Verlag München, 2016, 107-120